(19) **Europäisches Patentamt** / **European Patent Office** / **Office européen des brevets**

(11) **EP 4 668 746 A1**

(12) **EUROPEAN PATENT APPLICATION**
published in accordance with Art. 153(4) EPC

(43) Date of publication:
24.12.2025 Bulletin 2025/52

(21) Application number: 24766283.6

(22) Date of filing: 27.02.2024

(51) International Patent Classification (IPC):
*H04N 19/513* $^{(2014.01)}$

(52) Cooperative Patent Classification (CPC):
H04N 19/147; H04N 19/176; H04N 19/42;
H04N 19/513; H04N 19/70; H04N 19/96

(86) International application number:
PCT/CN2024/078771

(87) International publication number:
WO 2024/183561 (12.09.2024 Gazette 2024/37)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 06.03.2023 CN 202310254388

(71) Applicant: Huawei Technologies Co., Ltd.
Shenzhen, Guangdong 518129 (CN)

(72) Inventors:
• CHEN, Huanbang
  Shenzhen, Guangdong 518129 (CN)
• ZHU, Chen
  Shanghai 200240 (CN)
• ZHAO, Yin
  Shenzhen, Guangdong 518129 (CN)
• SONG, Li
  Shanghai 200240 (CN)

(74) Representative: Eisenführ Speiser
Patentanwälte Rechtsanwälte PartGmbB
Johannes-Brahms-Platz 1
20355 Hamburg (DE)

(54) **CODING METHOD, DECODING METHOD, APPARATUS, DEVICE, STORAGE MEDIUM AND COMPUTER PROGRAM**

(57) This application pertains to the field of image compression, and discloses an encoding method, apparatus, and device, a decoding method, apparatus, and device, a storage medium, and a computer program. The method includes: obtaining a target region; determining a position vector difference of a current block to be encoded in the target region; determining, based on a target alignment size and the position vector difference, position identification data corresponding to the position vector difference and a first flag bit; and encoding the position identification data and the first flag bit into a bitstream. Because the position identification data may be a multiple of the position vector difference relative to the target alignment size, a bit cost for encoding the position identification data corresponding to the position vector difference and the first flag bit is usually less than a bit cost for directly encoding the position vector difference. Encoding the position identification data and the first flag bit into the bitstream can effectively reduce a quantity of bits required for encoding the position vector difference, thereby ensuring relatively high efficiency of encoding an image including text content.

```
            ┌─────────────────────────────────────┐  501
            │       Obtain a target region        │
            └─────────────────────────────────────┘
                             │
            ┌─────────────────────────────────────┐  502
            │ Determine a position vector         │
            │ difference of a current block to be │
            │ encoded in the target region        │
            └─────────────────────────────────────┘
                             │
            ┌─────────────────────────────────────┐  503
            │ Determine, based on a target        │
            │ alignment size and the position     │
            │ vector difference of the current    │
            │ block, position identification data │
            │ corresponding to the position       │
            │ vector difference and a first flag  │
            │ bit                                 │
            └─────────────────────────────────────┘
                             │
            ┌─────────────────────────────────────┐  504
            │ Encode the position identification  │
            │ data and the first flag bit into a  │
            │ bitstream                           │
            └─────────────────────────────────────┘
```

FIG. 5

**Description**

This application claims priority to Chinese Patent Application No. 202310254388.7, filed on March 6, 2023 and entitled "ENCODING METHOD, APPARATUS, AND DEVICE, DECODING METHOD, APPARATUS, AND DEVICE, STORAGE MEDIUM, AND COMPUTER PROGRAM", which is incorporated herein by reference in its entirety.

**TECHNICAL FIELD**

This application relates to the field of image compression, and in particular, to an encoding method, apparatus, and device, a decoding method, apparatus, and device, a storage medium, and a computer program.

**BACKGROUND**

A high efficiency video coding (high efficiency video coding, HEVC) encoder can encode a video frame through motion compensation or intra block copy (intra block copy, IBC).

Motion compensation is used as an example. For a current block to be encoded in a video frame, a reference block corresponding to the current block may be determined, and a residual between the current block and the reference block is encoded into a bitstream. Then, a motion vector (motion vector, MV) between the current block and the reference block is determined, where the MV indicates a position relationship between the current block and the reference block, a motion vector predictor (motion vector predictor, MVP) corresponding to the MV is determined, a difference between the MV and the MVP is used as a motion vector difference (motion vector difference, MVD), and the MVD is encoded into the bitstream.

The foregoing encoding mode has relatively high encoding efficiency for a natural image, but has relatively low encoding efficiency for an image including text content.

**SUMMARY**

This application provides an encoding method, apparatus, and device, a decoding method, apparatus, and device, a storage medium, and a computer program, to resolve a problem that efficiency of encoding an image including text content is relatively low in a related technology. The technical solutions are as follows:

According to a first aspect, an encoding method is provided. The method includes: obtaining a target region, where the target region is obtained by performing alignment processing on a target image based on a target alignment size; determining a position vector difference of a current block to be encoded in the target region, where the position vector difference indicates a difference between a position vector of the current block and a reference position vector, and the position vector of the current block indicates a position relationship between the current block and a reference block corresponding to the current block; determining, based on the target alignment size and the position vector difference, position identification data corresponding to the position vector difference and a first flag bit, where the position identification data is a multiple of the position vector difference relative to the target alignment size or is the position vector difference, and the first flag bit indicates a category of the position identification data; and encoding the position identification data and the first flag bit into a bitstream.

For the target image including text content, after alignment processing is performed on the target image based on the target alignment size to obtain the target region, the position identification data corresponding to the position vector difference of the current block to be encoded in the target region and the first flag bit can be determined based on the target alignment size. The position identification data may be the multiple of the position vector difference relative to the target alignment size. In this case, encoding the position identification data corresponding to the position vector difference and the first flag bit requires fewer bits than encoding the position vector difference. In other words, a bit cost for encoding the position identification data corresponding to the position vector difference and the first flag bit is usually less than a bit cost for directly encoding the position vector difference. Therefore, encoding the position identification data corresponding to the position vector difference and the first flag bit into the bitstream can effectively reduce a quantity of bits required for encoding the position vector difference while ensuring encoding accuracy, thereby ensuring relatively high efficiency of encoding the image including text content.

Optionally, the target alignment size includes a horizontal alignment size, the position vector difference includes a horizontal component, the position identification data includes horizontal identification data, the first flag bit includes a horizontal flag bit, and the horizontal flag bit indicates a category of the horizontal identification data; and determining, based on the target alignment size and the position vector difference, the position identification data corresponding to the position vector difference and the first flag bit includes: if the horizontal component is an integer multiple of the horizontal alignment size, determining a multiple of the horizontal component relative to the horizontal alignment size as the horizontal identification data, and determining a first value as a value of the horizontal flag bit.

When the horizontal component is the integer multiple of the horizontal alignment size, the multiple of the horizontal component relative to the horizontal alignment size can accurately represent the horizontal component. Therefore, the multiple of the horizontal component relative to the horizontal alignment size is determined as the horizontal identification data. In this way, the horizontal component can be accurately encoded into the bitstream, and accuracy of encoding and decoding the horizontal component is ensured.

Optionally, the method further includes: if the horizontal component is not an integer multiple of the horizontal alignment size, determining the horizontal component as the horizontal identification data, and determining a second value as the value of the horizontal flag bit.

When the horizontal component is not the integer multiple of the horizontal alignment size, the multiple of the horizontal component relative to the horizontal alignment size cannot accurately represent the horizontal component. Therefore, the horizontal component is directly determined as the horizontal identification data, to avoid a horizontal component encoding error caused by encoding the multiple of the horizontal component relative to the horizontal alignment size into the bitstream, thereby ensuring accuracy of encoding and decoding the horizontal component.

Optionally, the target alignment size includes a vertical alignment size, the position vector difference includes a vertical component, the position identification data includes vertical identification data, the first flag bit includes a vertical flag bit, and the vertical flag bit indicates a category of the vertical identification data; and determining, based on the target alignment size and the position vector difference, the position identification data corresponding to the position vector difference and the first flag bit includes: if the vertical component is an integer multiple of the vertical alignment size, determining a multiple of the vertical component relative to the vertical alignment size as the vertical identification data, and determining a first value as a value of the vertical flag bit.

When the vertical component is the integer multiple of the vertical alignment size, the multiple of the vertical component relative to the vertical alignment size can accurately represent the vertical component. Therefore, the multiple of the vertical component relative to the vertical alignment size is determined as the vertical identification data. In this way, the vertical component can be accurately encoded into the bitstream, and accuracy of encoding and decoding the vertical component is ensured.

Optionally, the method further includes: if the vertical component is not an integer multiple of the vertical alignment size, determining the vertical component as the vertical identification data, and determining a second value as the value of the vertical flag bit.

When the vertical component is not the integer multiple of the vertical alignment size, the multiple of the vertical component relative to the vertical alignment size cannot accurately represent the vertical component. Therefore, the vertical component is directly determined as the vertical identification data, to avoid a vertical component encoding error caused by encoding the multiple of the vertical component relative to the vertical alignment size into the bitstream, thereby ensuring accuracy of encoding and decoding the vertical component.

Optionally, the target alignment size includes a horizontal alignment size and a vertical alignment size, the position vector difference includes a horizontal component and a vertical component, and the position identification data includes horizontal identification data and vertical identification data; and determining, based on the target alignment size and the position vector difference, the position identification data corresponding to the position vector difference and the first flag bit includes: determining a multiple of the horizontal component relative to the horizontal alignment size as the horizontal identification data, determining a multiple of the vertical component relative to the vertical alignment size as the vertical identification data, and determining a first value as a value of the first flag bit.

Optionally, determining the position vector difference of the current block to be encoded in the target region includes: determining a first candidate position vector difference and a second candidate position vector difference of the current block, where the first candidate position vector difference is determined based on first pixel precision, the second candidate position vector difference is determined based on second pixel precision, the first pixel precision is an integer, and the second pixel precision is a multiple of the target alignment size; determining a rate-distortion cost of the first candidate position vector difference and a rate-distortion cost of the second candidate position vector difference; and determining a candidate position vector difference with a smaller rate-distortion cost in the first candidate position vector difference and the second candidate position vector difference as the position vector difference of the current block.

Because the position vector difference of the current block is the candidate position vector difference with the smaller rate-distortion cost in the first candidate position vector difference and the second candidate position vector difference, the rate-distortion cost of the position vector difference of the current block is relatively small. In addition, when the position vector difference of the current block is the second candidate position vector difference, the multiple of the horizontal component relative to the horizontal alignment size may be directly determined as the horizontal identification data subsequently, and the multiple of the vertical component relative to the vertical alignment size may be determined as the vertical identification data. In this way, the horizontal component and the vertical component can be accurately encoded into the bitstream, and accuracy of encoding and decoding the horizontal component and the vertical component is ensured.

Optionally, determining the multiple of the horizontal component relative to the horizontal alignment size as the horizontal identification data, determining the multiple of the vertical component relative to the vertical alignment size as the vertical identification data, and determining the first value as the value of the first flag bit include: if the horizontal component is an integer multiple of the horizontal alignment size, and the vertical component is an integer multiple of the vertical alignment size, determining a multiple of the horizontal component relative to the horizontal alignment size as the horizontal identification data, determining a multiple of the vertical component relative to the vertical alignment size as the vertical identification data, and determining the first value as the value of the first flag bit.

When the horizontal component is the integer multiple of the horizontal alignment size and the vertical component is the integer multiple of the vertical alignment size, the multiple of the horizontal component relative to the horizontal alignment size can accurately represent the horizontal component, and the multiple of the vertical component relative to the vertical alignment size can also accurately represent the vertical component. Therefore, the multiple of the horizontal component relative to the horizontal alignment size can be determined as the horizontal identification data, and the multiple of the vertical component relative to the vertical alignment size can be determined as the vertical identification data. In this way, the horizontal component and the vertical component can be accurately encoded into the bitstream, and accuracy of encoding and decoding the horizontal component and the vertical component is ensured.

Optionally, the method further includes: if the horizontal component is not an integer multiple of the horizontal alignment size, and/or the vertical component is not an integer multiple of the vertical alignment size, determining the horizontal component as the horizontal identification data, determining the vertical component as the vertical identification data, and determining a second value as the value of the first flag bit.

When the horizontal component is not the integer multiple of the horizontal alignment size, and/or the vertical component is not the integer multiple of the vertical alignment size, the multiple of the horizontal component relative to the horizontal alignment size cannot accurately represent the horizontal component, and/or the multiple of the vertical component relative to the vertical alignment size cannot accurately represent the vertical component. Therefore, the horizontal component can be directly determined as the horizontal identification data, and the vertical component can be determined as the vertical identification data, to avoid a horizontal component encoding error caused by encoding the multiple of the horizontal component relative to the horizontal alignment size into the bitstream, and/or a vertical component encoding error caused by encoding the multiple of the vertical component relative to the vertical alignment size into the bitstream, thereby ensuring accuracy of encoding and decoding the horizontal component and the vertical component.

Optionally, the target alignment size includes a horizontal alignment size, the position vector difference includes a horizontal component, the position identification data includes horizontal identification data, the first flag bit includes a horizontal flag bit, and the horizontal flag bit is further used in combination with the horizontal identification data to indicate the horizontal component; and determining, based on the target alignment size and the position vector difference, the position identification data corresponding to the position vector difference and the first flag bit includes: determining a quotient obtained by dividing the horizontal component by the horizontal alignment size as the horizontal identification data, and determining a remainder obtained by dividing the horizontal component by the horizontal alignment size as a value of the horizontal flag bit.

Because the quotient and the remainder obtained by dividing the horizontal component by the horizontal alignment size can accurately represent the horizontal component, the quotient obtained by dividing the horizontal component by the horizontal alignment size can be determined as the horizontal identification data, and the remainder obtained by dividing the horizontal component by the horizontal alignment size can be determined as the value of the horizontal flag bit. In this way, the horizontal component can be accurately encoded into the bitstream, and accuracy of encoding and decoding the horizontal component is ensured.

Optionally, the target alignment size includes a vertical alignment size, the position vector difference includes a vertical component, the position identification data includes vertical identification data, the first flag bit includes a vertical flag bit, and the vertical flag bit is further used in combination with the vertical identification data to indicate the vertical component; and determining, based on the target alignment size and the position vector difference, the position identification data corresponding to the position vector difference and the first flag bit includes: determining a quotient obtained by dividing the vertical component by the vertical alignment size as the vertical identification data, and determining a remainder obtained by dividing the vertical component by the vertical alignment size as a value of the vertical flag bit.

Because the quotient and the remainder obtained by dividing the vertical component by the vertical alignment size can accurately represent the vertical component, the quotient obtained by dividing the vertical component by the vertical alignment size can be determined as the vertical identification data, and the remainder obtained by dividing the vertical component by the vertical alignment size can be determined as the value of the vertical flag bit. In this way, the vertical component can be accurately encoded into the bitstream, and accuracy of encoding and decoding the vertical component is ensured.

Optionally, the target region is obtained by performing alignment processing on a text region in the target image based on the target alignment size, and the text region includes at least one character.

If the target region is obtained by performing alignment processing on the text region in the target image based on the target alignment size, encoding the position identification data corresponding to the position vector difference and the first flag bit into the bitstream can effectively reduce the quantity of bits required for encoding the position vector difference while ensuring encoding accuracy, thereby ensuring relatively high efficiency of encoding the image including text content.

Optionally, the method further includes: encoding residual information of the current block into the bitstream, where the residual information indicates a prediction residual between the current block and the reference block.

Encoding the residual information of the current block into the bitstream can effectively ensure accuracy of encoding the current block.

According to a second aspect, a decoding method is provided. The method includes: parsing a bitstream to obtain position identification data corresponding to a position vector difference of a current block to be decoded in a target region and a first flag bit, where the position vector difference indicates a difference between a position vector of the current block and a reference position vector, the position vector of the current block indicates a position relationship between the current block and a reference block corresponding to the current block, the position identification data is a multiple of the position vector difference relative to a target alignment size or is the position vector difference, and the first flag bit indicates a category of the position identification data; determining the position vector difference based on the target alignment size, the position identification data, and the first flag bit; and reconstructing the current block based on the position vector difference.

Because the position identification data may be the multiple of the position vector difference relative to the target alignment size, and encoding the position identification data corresponding to the position vector difference and the first flag bit requires fewer bits than encoding the position vector difference, when the position identification data is the multiple of the position vector difference relative to the target alignment size, efficiency of decoding the position identification data is higher than efficiency of decoding the position vector difference. In this way, efficiency of decoding an image including text content is improved while decoding accuracy is ensured. In addition, the decoding method provided in this application can be combined with a standard video decoding method without affecting a standard video decoding procedure. In other words, the decoding method provided in this application has relatively strong portability and can improve efficiency of decoding the image including text content without adding additional hardware costs.

Optionally, the target alignment size includes a horizontal alignment size, the position vector difference includes a horizontal component, the position identification data includes horizontal identification data, the first flag bit includes a horizontal flag bit, and the horizontal flag bit indicates a category of the horizontal identification data; and determining the position vector difference based on the target alignment size, the position identification data, and the first flag bit includes: if a value of the horizontal flag bit is a first value, multiplying the horizontal alignment size by the horizontal identification data to obtain the horizontal component.

When the value of the horizontal flag bit is the first value, it indicates that the horizontal identification data is a multiple of the horizontal component relative to the horizontal alignment size. Therefore, the horizontal alignment size is multiplied by the horizontal identification data to obtain the horizontal component. In addition, when the horizontal flag bit is the first value, efficiency of decoding the horizontal identification data is higher than efficiency of decoding the horizontal component. In this way, efficiency of decoding the image including text content can be improved while decoding accuracy is ensured.

Optionally, the method further includes: if the value of the horizontal flag bit is a second value, determining the horizontal identification data as the horizontal component.

When the value of the horizontal flag bit is the second value, it indicates that the horizontal identification data is the horizontal component. Therefore, the horizontal identification data may be directly determined as the horizontal component.

Optionally, the target alignment size includes a vertical alignment size, the position vector difference includes a vertical component, the position identification data includes vertical identification data, the first flag bit includes a vertical flag bit, and the vertical flag bit indicates a category of the vertical identification data; and determining the position vector difference based on the target alignment size, the position identification data, and the first flag bit includes: if a value of the vertical flag bit is a first value, multiplying the vertical alignment size by the vertical identification data to obtain the vertical component.

When the value of the vertical flag bit is the first value, it indicates that the vertical identification data is a multiple of the vertical component relative to the vertical alignment size. Therefore, the vertical alignment size is multiplied by the vertical identification data to obtain the vertical component. In addition, when the vertical flag bit is the first value, efficiency of decoding the vertical identification data is higher than efficiency of decoding the vertical component. In this way, efficiency of decoding the image including text content can be improved while decoding accuracy is ensured.

Optionally, the method further includes: if the value of the vertical flag bit is a second value, determining the vertical identification data as the vertical component.

When the value of the vertical flag bit is the second value, it indicates that the vertical identification data is the vertical component. Therefore, the vertical identification data may be directly determined as the vertical component.

Optionally, the target alignment size includes a horizontal alignment size and a vertical alignment size, the position vector difference includes a horizontal component and a vertical component, and the position identification data includes horizontal identification data and vertical identification data; and determining the position vector difference based on the target alignment size, the position identification data, and the first flag bit includes: if a value of the first flag bit is a first value, multiplying the horizontal alignment size by the horizontal identification data to obtain the horizontal component, and multiplying the vertical alignment size by the vertical identification data to obtain the vertical component.

When the value of the first flag bit is the first value, it indicates that the position identification data is the multiple of the position vector difference relative to the target alignment size. Therefore, the horizontal alignment size is multiplied by the horizontal identification data to obtain the horizontal component, and the vertical alignment size is multiplied by the vertical identification data to obtain the vertical component. In addition, because encoding the multiple of the position vector difference relative to the target alignment size requires fewer bits than encoding the position vector difference of the current block, when the value of the first flag bit is the first value, efficiency of decoding the position identification data is higher than efficiency of decoding the position vector difference. In this way, efficiency of decoding the image including text content can be improved while decoding accuracy is ensured.

Optionally, the method further includes: if the value of the first flag bit is a second value, determining the horizontal identification data as the horizontal component, and determining the vertical identification data as the vertical component.

When the value of the first flag bit is the second value, it indicates that the position identification data is the position vector difference. Therefore, the horizontal identification data may be directly determined as the horizontal component, and the vertical identification data may be directly determined as the vertical component.

Optionally, the target alignment size includes a horizontal alignment size, the position vector difference includes a horizontal component, the position identification data includes horizontal identification data, the first flag bit includes a horizontal flag bit, and the horizontal flag bit is further used in combination with the horizontal identification data to indicate the horizontal component; and determining the position vector difference based on the target alignment size, the position identification data, and the first flag bit includes: multiplying the horizontal identification data by the horizontal alignment size and then adding a value of the horizontal flag bit to obtain the horizontal component.

Because the horizontal identification data corresponding to the horizontal component and the horizontal flag bit are a quotient and a remainder obtained by dividing the horizontal component by the horizontal alignment size, and a quantity of bits required for encoding the quotient and the remainder is less than a quantity of bits required for directly encoding the horizontal component, in a decoding process, efficiency of decoding the horizontal identification data corresponding to the horizontal component and the horizontal flag bit is higher than efficiency of decoding the horizontal component. In this way, efficiency of decoding the image including text content can be improved while decoding accuracy is ensured.

Optionally, the target alignment size includes a vertical alignment size, the position vector difference includes a vertical component, the position identification data includes vertical identification data, the first flag bit includes a vertical flag bit, and the vertical flag bit is further used in combination with the vertical identification data to indicate the vertical component; and determining the position vector difference based on the target alignment size, the position identification data, and the first flag bit includes: multiplying the vertical identification data by the vertical alignment size and then adding a value of the vertical flag bit to obtain the vertical component.

Because the vertical identification data corresponding to the vertical component and the vertical flag bit are a quotient and a remainder obtained by dividing the vertical component by the vertical alignment size, and a quantity of bits required for encoding the quotient and the remainder is less than a quantity of bits required for directly encoding the vertical component, in a decoding process, efficiency of decoding the vertical identification data corresponding to the vertical component and the vertical flag bit is higher than efficiency of decoding the vertical component. In this way, efficiency of decoding the image including text content can be improved while decoding accuracy is ensured.

Optionally, the method further includes: parsing the bitstream to obtain residual information of the current block, where the residual information indicates a prediction residual between the current block and the reference block; and reconstructing the current block based on the position vector difference includes: reconstructing the current block based on the position vector difference and the residual information.

When the residual information of the current block is obtained through parsing, the current block is reconstructed based on the position vector difference and the residual information, so that accuracy of the reconstructed current block can be effectively ensured.

According to a third aspect, an encoding apparatus is provided. The encoding apparatus has a function of implementing behavior of the encoding method in the first aspect. The encoding apparatus includes at least one module. The at least one module is configured to implement the encoding method provided in the first aspect.

According to a fourth aspect, a decoding apparatus is provided. The decoding apparatus has a function of implementing behavior of the decoding method in the second aspect. The decoding apparatus includes at least one module. The at least one module is configured to implement the decoding method provided in the second aspect.

According to a fifth aspect, an encoding device is provided. The encoding device includes a processor and a memory. The memory is configured to store a program for performing the encoding method provided in the first aspect. The processor is configured to execute the program stored in the memory, to implement the encoding method provided in the first aspect.

Optionally, the encoding device may further include a communication bus. The communication bus is configured to establish a connection between the processor and the memory.

According to a sixth aspect, a decoding device is provided. The decoding device includes a processor and a memory. The memory is configured to store a program for performing the decoding method provided in the second aspect. The processor is configured to execute the program stored in the memory, to implement the decoding method provided in the second aspect.

Optionally, the decoding device may further include a communication bus. The communication bus is configured to establish a connection between the processor and the memory.

According to a seventh aspect, a computer-readable storage medium is provided. The storage medium stores instructions. When the instructions are run on a computer, the computer is enabled to perform the steps of the encoding method according to the first aspect or the steps of the decoding method according to the second aspect.

According to an eighth aspect, a computer program product including instructions is provided. When the instructions are run on a computer, the computer is enabled to perform the steps of the encoding method according to the first aspect or the steps of the decoding method according to the second aspect. In other words, a computer program is provided. When the computer program is run on the computer, the computer is enabled to perform the steps of the encoding method according to the first aspect or the steps of the decoding method according to the second aspect.

According to a ninth aspect, an encoding and decoding system is provided. The encoding and decoding system includes an encoding device and a decoding device. The encoding device is configured to implement the steps of the encoding method according to the first aspect. The decoding device is configured to implement the steps of the decoding method according to the second aspect.

Technical effects achieved in the third aspect to the ninth aspect are similar to the technical effects achieved by using corresponding technical means in the first aspect or the second aspect. Details are not described herein again.

**BRIEF DESCRIPTION OF DRAWINGS**

FIG. 1 is a diagram of an implementation environment according to an embodiment of this application;
FIG. 2 is a diagram of another implementation environment according to an embodiment of this application;
FIG. 3 is a diagram of a structure of a video encoding module according to an embodiment of this application;
FIG. 4 is a diagram of a structure of a video decoding module according to an embodiment of this application;
FIG. 5 is a flowchart of a first encoding method according to an embodiment of this application;
FIG. 6 is a diagram of a target region according to an embodiment of this application;
FIG. 7 is a diagram of a filled text region according to an embodiment of this application;
FIG. 8 is a flowchart of a first decoding method according to an embodiment of this application;
FIG. 9 is a diagram of a structure of an encoding apparatus according to an embodiment of this application; and
FIG. 10 is a diagram of a structure of a decoding apparatus according to an embodiment of this application.

**DESCRIPTION OF EMBODIMENTS**

To make objectives, technical solutions, and advantages of embodiments of this application clearer, the following further describes implementations of this application in detail with reference to the accompanying drawings.

For ease of understanding, before an encoding method and a decoding method provided in embodiments of this application are described in detail, terms, application scenarios, and implementation environments in embodiments of this application are first described.

**High efficiency video coding (high efficiency video coding, HEVC):** HEVC is a video compression standard that uses a block-based hybrid video coding/compression structure. The block-based hybrid video coding/compression structure combines technical means such as prediction (prediction), transformation (transformation), quantization (quantization), block partitioning (block partitioning), in-loop filter (in-loop filter), and entropy coding (entropy coding) to compress a video, so as to reduce redundant signals in the video. An encoder partitions an input video frame or a video signal into coding tree units (coding tree unit, CTU) of approximately equal sizes, and for any CTU, performs prediction on the CTU and obtains a prediction residual corresponding to the CTU. The prediction residual is transformed into a frequency domain transform coefficient, and then the frequency domain transform coefficient is quantized for lossy compression. The quantized frequency domain transform coefficient is encoded into a bitstream through entropy coding (entropy coding). Further, the CTU is reconstructed based on the bitstream by using technical means such as dequantization, inverse transformation, and in-loop filter (in-loop filter) to obtain a reconstruction value of the video frame. Subsequently, another CTU can be encoded based on the reconstruction value.

The prediction and transformation mean reducing redundancy in the video signal by removing correlation between pixels in each CTU in time domain, space domain, and frequency domain. The prediction includes inter prediction and intra prediction. The quantization means reducing precision of the transform coefficient to reduce a quantity of bits representing the transform coefficient. A purpose of the quantization is to remove details that are difficult to perceive in the video frame, thereby effectively reducing data uncorrelation. Detailed content about block partitioning is described later, and is not described herein.

The hybrid video coding structure is usually used to process a natural video captured by a camera. However, in recent years, screen content videos, including computer-generated texts, graphics, and animations, have become popular. The screen content videos show colors and other signal features that are different from those of natural videos. To meet requirements for efficiently encoding screen content videos, many screen content coding (screen content coding, SCC) tools are developed, and encoding efficiency is greatly improved. HEVC SCC is a coding standard including an SCC function. The HEVC SCC includes coding tools such as intra block copy (Intra Block Copy, IBC) and a palette, which can improve compression efficiency of screen content by 30% to 40%.

**Block partition (block partition):** The HEVC standard introduces a set of basic units that are based on recursive quadtree partitioning, including a coding unit (coding unit, CU), a prediction unit (prediction unit, PU), and a transform unit (transform unit, TU). In a HEVC encoder, an input image is first partitioned into a plurality of non-overlapping coding tree units (coding tree unit, CTU) of a same size. A size of a CTU is determined by the encoder, and a maximum size of the CTU may reach 64×64. In a subsequent encoding process, one CTU may be directly used as one CU, or may be further partitioned into a plurality of CUs of a smaller size in a recursive quadtree partitioning mode. A depth of CU partitioning is determined based on a rate-distortion cost (rate-distortion cost) obtained through calculation. The encoder compares and trades off different partitioning modes to select a partitioning mode with a lowest rate-distortion cost for encoding. Finally, a CU at a leaf node of a quadtree is a basic unit for the encoder to perform subsequent prediction, transformation, and encoding. Usually, during block partitioning, shallower partitioning depths and larger CUs are used for flat and smooth regions, and deeper partitioning depths and smaller CUs are used for regions with complex colors. In this way, processing of prediction, transformation, quantization, and other modules is more convenient and accurate, and selection of an encoding mode better matches image features of video content, thereby effectively improving encoding efficiency.

The PU is a basic unit for the encoder to perform prediction. The PU includes all prediction-related information and is obtained by further partitioning the CU. For a 2N×2N CU, there are eight optional partitioning modes in total for the PU, including four symmetric modes (that is, 2N×2N, N×N, 2N×N, and N×2N), and four asymmetric modes with a 1:3 or 3:1 ratio for partitioning. Introduction of a plurality of partitioning modes can make prediction of a complex image more accurate.

The TU is a basic unit for the encoder to perform transformation and quantization. A size of the TU depends on a CU to which the TU belongs. A CU is allowed to be further partitioned in a quadtree partitioning mode to obtain a TU. A minimum size of the TU is 4×4, and a maximum size of the TU may reach 32×32. Depending on content characteristics, the encoder can flexibly select an optimal partitioning mode for the TU.

**Inter prediction:** The inter prediction includes a motion estimation (motion estimation, ME) unit and a motion compensation (motion compensation, MC) unit. A basic idea of motion estimation is to partition a video frame into many non-overlapping macroblocks and then find a block most similar to a current block according to a matching rule, that is, a reference block or a matching block. A relative displacement between the reference block and the current block is a motion vector (motion vector, MV). A difference between a pixel value of the current block and a pixel value of the reference block is referred to as a prediction residual between the current block and the reference block. A process of determining the MV is referred to as motion estimation. Motion compensation means that the reference block corresponding to the current block is determined based on the MV, and then the current block is reconstructed based on the prediction residual between the current block and the reference block.

**Motion vector (motion vector, MV) predictive coding:** Because the MV of the current block is generally related to an MV of a neighboring block in the current or neighboring image, the MV of the neighboring block in the current or neighboring image may be used as a motion vector predictor (motion vector predictor, MVP) to reduce a signal amplitude of the MV of the current block. This is an MV predictive coding idea.

In an evolution process of the coding standard, the MV predictive coding method is greatly optimized. MV prediction in the H.261 standard is simple differential coding. The H.265/HEVC standard introduces a motion vector competition scheme, that is, an MVP list is collected, and an index of an optimal MVP is transmitted. Herein, neighboring MVs in space and time are added to a candidate list, an MV with an optimal compression cost is selected from the list as an MVP and an index of the MV is transmitted, and a motion vector difference (motion vector difference, MVD) is obtained by subtracting the MVP from the MV, that is, MVD = MV - MVP. The MVD usually includes two components: a vertical component and a horizontal component, and needs to be compressed and transmitted. At a decoder side, the MV of the current block may be calculated by establishing an MVP list the same as the MVP list at an encoder side and based on the index of the transmitted MVP in the list and the MVD.

In the HEVC standard, the MVP is determined in two modes: an advanced motion vector predictor (advanced motion vector predictor, AMVP) mode and a merge (merge) mode. The AMVP mode can cope with a flexible block structure in HEVC, and the merge mode can reduce redundancy in block partitioning.

**Intra block copy (intra block copy, IBC):** IBC is an important tool for screen content coding in HEVC SCC. IBC is a block-based prediction technology, and its mechanism is similar to that of inter prediction or motion compensation. The motion compensation means that, for a current prediction unit, the encoder finds, based on a motion search algorithm, an optimal matching block in a previously encoded reference image as the reference block corresponding to the current block, where the motion vector (Motion Vector, MV) indicates the matching relationship. The difference between the pixel value of the current block and the pixel value of the reference block is used as the prediction residual between the current block and the reference block. The prediction residual is processed by modules such as transformation, quantization, and entropy coding, and then output to a bitstream.

A main difference between the IBC and the motion compensation lies in that a reference image in the IBC is obtained from inside of the current image (a reconstructed part), and that there is a block vector (block vector, BV) similar to the motion vector to indicate a block matching relationship. The IBC can better process screen content including a plurality of similar graphics or texts in a video frame, that is, the current block can reference a block including a similar graphic in the current image, and a prediction residual with a pixel value close to 0 may be obtained. This residual occupies a very low bit rate in the bitstream. An encoding process of remaining parts of the IBC, including a syntax structure and related information, is almost the same as that of the motion compensation.

A key of the IBC technology is BV coding. In the conventional technology, a BV coding method is similar to the MV predictive coding method in the foregoing inter prediction, that is, in the IBC mode, the BV is similar to the MV, a block vector predictor (block vector predictor, BVP) is similar to the MVP, and a block vector difference (block vector difference, BVD) is similar to the MVD. For ease of description, in the following description, the BV and the MV are collectively referred to as a position vector, the BVP and the MVP are collectively referred to as a reference position vector, and the BVD and the MVD are collectively referred to as a position vector difference.

Image compression is a technology that uses image data features such as spatial redundancy, visual redundancy, and statistical redundancy to represent an original image pixel matrix with fewer bits in a lossy or lossless manner. Image compression enables efficient transmission and storage of image information and plays an important role in a current media era with increasingly diverse types and large data volumes of image information.

Currently, a video compression standard such as HEVC has been formed. The HEVC can divide a video into a plurality of video frames, and the encoder may encode the video frames in the motion compensation mode or the IBC mode. However, when the foregoing encoding mode is applied to an image including text content, pixels of a same character may be assigned to different CTUs or CUs. In this case, when subsequent operations such as prediction, transformation, and quantization are performed, encoding efficiency is relatively low during compression of the text content.

Based on the foregoing problems, an adaptive text alignment encoding scheme emerges. In this scheme, an image including text content, that is, a target image, can be processed to obtain a text region and a non-text region corresponding to the target image. Alignment processing is performed on the text region in the target image based on a target alignment size, to obtain a processed text region, that is, a target region, where the target alignment size is related to a size of a CU. Then the target region and the non-text region are encoded separately. Because the target alignment size is related to the size of the CU, when block partitioning is performed on the target region, pixels of a same character can be prevented, to a greatest extent, from being assigned to different CUs. In this way, accuracy and efficiency of compressing the text content are improved.

The foregoing adaptive text alignment encoding scheme resolves a problem that pixels of a same character are assigned to different CTUs or CUs. However, a position vector of text content usually points from one character (that is, a current block or a current character) to another character (that is, a reference block or a reference character) with similar content, but characters are arranged based on semantics, and same characters do not appear in groups. Therefore, reference characters corresponding to two adjacent characters are usually different, and there is a relatively large difference between position vectors of the two adjacent characters. As a result, when a position vector of a character is encoded, a difference between the position vector of the character and a reference position vector is relatively large, and a position vector difference with a relatively large value is obtained. In this case, the position vector difference needs to be encoded by using a relatively large quantity of bits, and consequently, efficiency of encoding the target image is relatively low. Based on this, embodiments of this application provide an encoding method and a decoding method. In an encoding process, based on a target alignment size and a position vector difference of a current block, position identification data corresponding to the position vector difference and a first flag bit can be encoded into a bitstream. The position identification data may be a multiple of the position vector difference relative to the target alignment size. In this case, encoding the position identification data corresponding to the position vector difference and the first flag bit requires fewer bits than encoding the position vector difference. In other words, a bit cost for encoding the position identification data corresponding to the position vector difference and the first flag bit is usually less than a bit cost for directly encoding the position vector difference. Therefore, according to the encoding method provided in embodiments of this application, a quantity of bits required for encoding the position vector difference can be effectively reduced while encoding accuracy is ensured, thereby ensuring relatively high efficiency of encoding a target image.

The following describes the implementation environments in embodiments of this application.

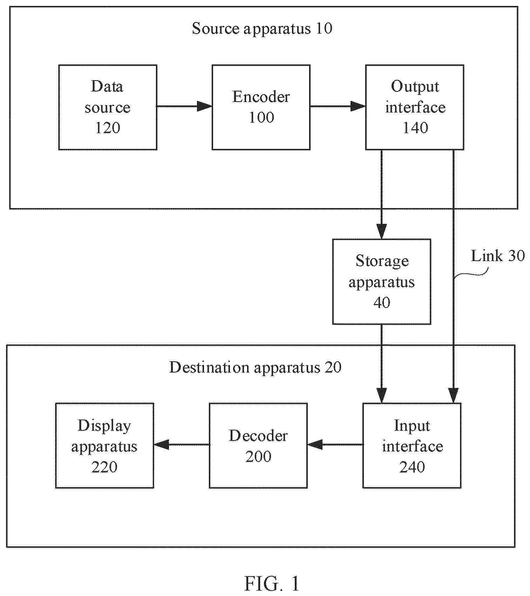

FIG. 1 is a diagram of an implementation environment according to an embodiment of this application. The implementation environment includes a source apparatus 10, a destination apparatus 20, a link 30, and a storage apparatus 40. The source apparatus 10 may generate an encoded video, that is, a bitstream. Therefore, the source apparatus 10 may also be referred to as an encoding apparatus. The destination apparatus 20 may decode the bitstream generated by the source apparatus 10. Therefore, the destination apparatus 20 may also be referred to as a decoding apparatus. The link 30 may receive the encoded video generated by the source apparatus 10, and may transmit the encoded video to the destination apparatus 20. The storage apparatus 40 may receive the encoded video generated by the source apparatus 10, and may store the encoded video. In this case, the destination apparatus 20 may directly obtain the encoded video from the storage apparatus 40. Alternatively, the storage apparatus 40 may correspond to a file server or another intermediate storage apparatus that may store the encoded video generated by the source apparatus 10. In this case, the destination apparatus 20 may transmit, in a streaming manner, or download the encoded video stored in the storage apparatus 40.

The source apparatus 10 and the destination apparatus 20 each may include one or more processors and a memory coupled to the one or more processors. The memory may include a random access memory (random access memory, RAM), a read-only memory (read-only memory, ROM), an electrically erasable programmable read-only memory (electrically erasable programmable read-only memory, EEPROM), a flash memory, any other medium that can be configured to store required program code in a form of instructions or data structures accessible by a computer, or the like. For example, the source apparatus 10 and the destination apparatus 20 may each include a mobile phone, a smartphone, a personal digital assistant (personal digital assistant, PDA), a wearable device, a palmtop computer (pocket PC, PPC), a tablet computer, a smart in-vehicle infotainment, a smart television, a smart sound box, a desktop computer, a mobile computing apparatus, a notebook (for example, a laptop) computer, a tablet computer, a set-top box, a handheld telephone such as a "smart" phone, a television, a camera, a display apparatus, a digital media player, a video game console, a vehicle-mounted computer, or the like.

The link 30 may include one or more media or apparatuses that can transmit the encoded video from the source apparatus 10 to the destination apparatus 20. In a possible implementation, the link 30 may include one or more communication media that can enable the source apparatus 10 to directly send the encoded video to the destination apparatus 20 in real time. In this embodiment of this application, the source apparatus 10 may modulate the encoded video according to a communication standard, where the communication standard may be a wireless communication protocol or the like; and may send a modulated video to the destination apparatus 20. The one or more communication media may include a wireless communication medium and/or a wired communication medium. For example, the one or more communication media may include a radio frequency (radio frequency, RF) spectrum or one or more physical transmission lines. The one or more communication media may be a part of a packet-based network. The packet-based network may be a local area network, a wide area network, a global network (for example, the Internet), or the like. The one or more communication media may include a router, a switch, a base station, another device that facilitates communication from the source apparatus 10 to the destination apparatus 20, or the like. This is not specifically limited in this embodiment of this application.

In a possible implementation, the storage apparatus 40 may store the received encoded video sent by the source apparatus 10, and the destination apparatus 20 may directly obtain the encoded video from the storage apparatus 40. In this case, the storage apparatus 40 may include any one of a plurality of distributed or locally accessed data storage media. For example, any one of the plurality of distributed or locally accessed data storage media may be a hard disk drive, a Blu-ray disc, a digital versatile disc (digital versatile disc, DVD), a compact disc read-only memory (compact disc read-only memory, CD-ROM), a flash memory, a volatile or non-volatile memory, or any other appropriate digital storage medium configured to store a bitstream.

In a possible implementation, the storage apparatus 40 may correspond to a file server or another intermediate storage apparatus that may store a bitstream generated by the source apparatus 10, and the destination apparatus 20 may transmit, in a streaming manner, or download an image stored in the storage apparatus 40. The file server may be any type of server that can store an encoded video and send the encoded video to the destination apparatus 20. In a possible implementation, the file server may include a network server, a file transfer protocol (file transfer protocol, FTP) server, a network attached storage (network attached storage, NAS) apparatus, a local disk drive, or the like. The destination apparatus 20 may obtain the encoded image through any standard data connection (including an Internet connection). The any standard data connection may include a wireless channel (for example, a Wi-Fi connection), a wired connection (for example, a digital subscriber line (digital subscriber line, DSL) or a cable modem), or a combination of a wireless channel and a wired connection that are suitable for obtaining the encoded video stored on the file server. Transmission of the encoded video from the storage apparatus 40 may be streaming transmission, transmission in a download manner, or a combination thereof.

The implementation environment shown in FIG. 1 is merely a possible implementation. In addition, technologies in embodiments of this application are not only applicable to the source apparatus 10 that may encode an image and the destination apparatus 20 that may decode an encoded video in FIG. 1, but also applicable to another apparatus that may encode a video and decode a bitstream. This is not specifically limited in embodiments of this application.

In the implementation environment shown in FIG. 1, the source apparatus 10 includes a data source 120, an encoder 100, and an output interface 140. In some embodiments, the output interface 140 may include a modulator/demodulator (modem) and/or a transmitter. The transmitter may also be referred to as an emitter. The data source 120 may include a video capture apparatus (for example, a camera), an archive containing a previously captured video, a feed interface for receiving a video from a video content provider, and/or a computer graphics system for generating a video, or a combination of these video sources.

The data source 120 may send a video to the encoder 100. The encoder 100 may encode the received video sent by the data source 120, to obtain an encoded video. The encoder may send the encoded video to the output interface. In some embodiments, the source apparatus 10 directly sends the encoded video to the destination apparatus 20 through the output interface 140. In another embodiment, the storage apparatus 40 may alternatively store the encoded video, which is later obtained and decoded and/or displayed by the destination apparatus 20.

In the implementation environment shown in FIG. 1, the destination apparatus 20 includes an input interface 240, a decoder 200, and a display apparatus 220. In some embodiments, the input interface 240 includes a receiver and/or a modem. The input interface 240 may receive an encoded video via the link 30 and/or from the storage apparatus 40, and then send the encoded video to the decoder 200. The decoder 200 may decode the received encoded video to obtain a decoded video. The decoder may send the decoded video to the display apparatus 220. The display apparatus 220 may be integrated with the destination apparatus 20 or disposed outside the destination apparatus 20. Generally, the display apparatus 220 displays the decoded video. The display apparatus 220 may be a display apparatus of any one of a plurality of types. For example, the display apparatus 220 may be a liquid crystal display (liquid crystal display, LCD), a plasma display, an organic light-emitting diode (organic light-emitting diode, OLED) display, or another type of display apparatus.

Although not shown in FIG. 1, in some aspects, the encoder 100 and the decoder 200 may be respectively integrated with an encoder and a decoder, and may include an appropriate multiplexer-demultiplexer (multiplexer-demultiplexer, MUX-DEMUX) unit or other hardware and software for encoding both audio and a video in a shared data stream or a separate data stream. In some embodiments, if applicable, the MUX-DEMUX unit may comply with the ITU H.223 multiplexer protocol or another protocol like the user datagram protocol (user datagram protocol, UDP).

The encoder 100 and the decoder 200 each may be any one of the following circuits: one or more microprocessors, a digital signal processor (digital signal processor, DSP), an application-specific integrated circuit (application-specific integrated circuit, ASIC), a field-programmable gate array (field-programmable gate array, FPGA), discrete logic, hardware, or any combination thereof. If technologies in embodiments of this application are partially implemented in software, an apparatus may store instructions for the software in an appropriate non-volatile computer-readable storage medium, and may execute the instructions in hardware by using one or more processors, to implement technologies in embodiments of this application. Any one of the foregoing content (including hardware, software, a combination of hardware and software, and the like) may be considered as one or more processors. The encoder 100 and the decoder 200 each may be included in one or more encoders or decoders. Either the encoder or the decoder may be integrated as a part of a combined encoder/decoder (codec) in a corresponding apparatus.

In this embodiment of this application, the encoder 100 may be generally referred to as "signaling" or "sending" some information to another apparatus, for example, the decoder 200. The term "signaling" or "sending" may generally indicate transmission of a syntax element and/or other data used to decode a compressed video. Such transmission may occur in real time or almost in real time. Alternatively, such communication may occur after a period of time, for example, may occur when a syntax element in an encoded bitstream is stored in a computer-readable storage medium during encoding, and then a decoding apparatus may retrieve the syntax element at any time after the syntax element is stored in the medium.

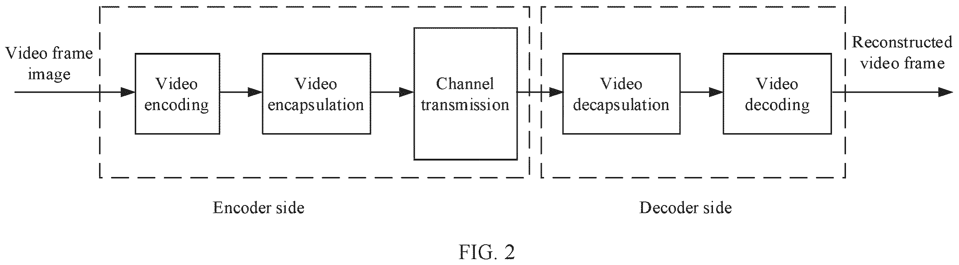

FIG. 2 is a diagram of another implementation environment according to an embodiment of this application. The implementation environment includes an encoder side and a decoder side. The encoder side includes a video encoding module, a video encapsulation module, and a channel transmission module. The decoder side includes a video decapsulation module and a video decoding module. It should be noted that the encoder side including the channel transmission module is merely an example. In actual application, the decoder side may also include a channel transmission module. Alternatively, the channel transmission module does not belong to the encoder side or the decoder side, but is used as an independent unit. This is not limited in this embodiment of this application.

For each video frame in a video to be encoded, the video encoding module may encode the video frame to obtain a bitstream or an encoded file of the video frame, and then the video encapsulation module performs video encapsulation on the encoded file to convert the encoded file into a video format convenient for transmission. The channel transmission module transmits the encapsulated encoded file to the decoder side. The decoder side receives the transmitted encoded file, decapsulates the encoded file, and reconstructs the encoded file by using the video decoding module, to obtain a reconstructed video frame.

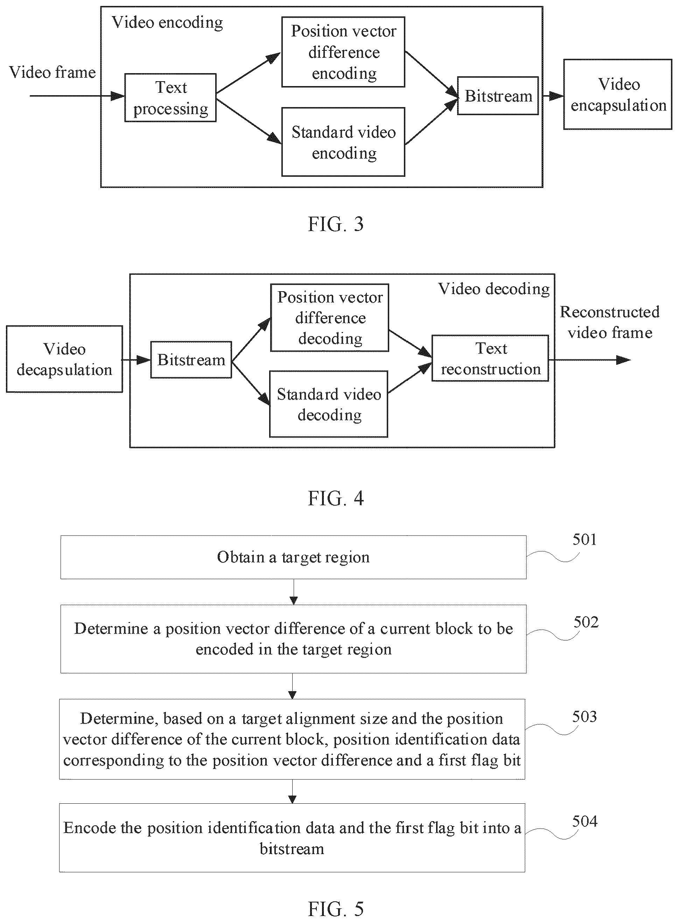

With reference to FIG. 3, the video encoding module of the encoder side may include a text processing submodule, a position vector difference encoding submodule, and a standard video encoding submodule. For a video frame to be encoded, the text processing submodule may perform alignment processing on a text region in the video frame based on a target alignment size, where the text region includes at least one character. The position vector difference encoding submodule determines a position vector difference of a current block to be encoded in the aligned text region, determines, based on the target alignment size and the position vector difference of the current block, position identification data corresponding to the position vector difference and a first flag bit, and then encodes the position identification data corresponding to the position vector difference and the first flag bit into a bitstream, to encode the position vector difference. The standard video encoding submodule also encodes residual information and edge information of the current block into the bitstream, where the residual information indicates a prediction residual between the current block and a reference block, and the edge information includes the target alignment size.

Optionally, the video frame may further include a non-text region. For the non-text region, the standard video encoding submodule may directly encode the non-text region into the bitstream in a standard video encoding mode.

With reference to FIG. 4, the video decoding module of the decoder side may include a position vector difference decoding submodule, a standard video decoding submodule, and a text reconstruction submodule. The position vector difference decoding submodule may parse the bitstream to obtain the position identification data corresponding to the position vector difference of the current block to be decoded in the text region and the first flag bit, the standard video decoding submodule parses the bitstream to obtain the residual information and the edge information of the current block, and then the text reconstruction submodule determines the position vector difference of the current block based on the target alignment size and the position identification data corresponding to the position vector difference of the current block and the first flag bit and reconstructs the current block in the text region based on the residual information and the position vector difference.

Optionally, for the non-text region, the standard video decoding submodule parses the bitstream to obtain the non-text region in a standard video decoding mode, and then performs text reconstruction on the non-text region and the text region to obtain a reconstructed video frame.

It should be noted that the standard video encoding/decoding mode may employ a video compression standard that uses a block-based hybrid video coding/compression structure, for example, HEVC. Certainly, another encoding/-decoding mode may be used. This is not limited in this embodiment of this application.

The encoding method and the decoding method provided in embodiments of this application may be applied to a plurality of scenarios. For example, for video applications such as online conferencing and online education, text content usually occupies a large part of video content, and people also mainly focus on a text part. Therefore, compression of an image including text content is crucial. The following describes a method for encoding/decoding an image including text content according to an embodiment of this application. It should be noted that, with reference to the implementation environments shown in FIG. 1 and FIG. 2, any encoding method in the following description may be performed by the encoder 100 in the source apparatus 10, or may be performed by the video encoding module in FIG. 2. Any decoding method in the following description may be performed by the decoder 200 in the destination apparatus 20, or may be performed by the video decoding module in FIG. 2.

The following describes in detail the encoding method and the decoding method provided in embodiments of this application by using a plurality of embodiments.

FIG. 5 is a flowchart of a first encoding method according to an embodiment of this application. With reference to FIG. 5, the method includes the following steps.

**Step 501**: Obtain a target region, where the target region is obtained by performing alignment processing based on a target alignment size.

In some embodiments, the target region is obtained by performing alignment processing on a text region in a target image based on the target alignment size, and the text region includes at least one character.

In other words, the text region in the target image may be determined, where the text region includes at least one character, and alignment processing is performed on the text region based on the target alignment size to obtain the target region.

Optionally, text recognition is performed on the target image by using a text recognition network model, to obtain the text region in the target image. In other words, the target image is used as an input of the text recognition network model, and the text recognition network model can output the text region in the target image based on the target image. Certainly, in actual application, the text region may alternatively be determined in another manner, for example, a manner based on a projection diagram or a pixel color. This is not limited in this embodiment of this application.

In some embodiments, a position of the text region in the target image may also be determined. For example, when the text region in the target image is determined by using the text recognition network model, the position of the text region in the target image may also be determined.

An implementation process of performing alignment processing on the text region includes: filling the text region in the target image based on the target alignment size to obtain a filled text region, and determining the target region based on the filled text region.

In some embodiments, the target alignment size is a positive integer multiple of any size in a size set, and the target alignment size is greater than or equal to a size of the text region in the target image.

The target image may be encoded by using a related encoding method. In the related encoding/decoding method, the target image is usually partitioned to obtain a CU, and subsequent processing is performed based on the CU. A size of the CU may include one of 8, 16, 32, and 64. Therefore, the size set may include 8, 16, 32, and 64. Certainly, the size set may alternatively be determined based on the size of the CU. A size in the size set is not less than the size of the CU, and is equal to an integer multiple of the size of the CU. For example, the size of the CU is 8, and sizes in the size set may include 8 and 16. For another example, the size of the CU is 32, and the size in the size set may include 32.

The target alignment size includes a horizontal alignment size and a vertical alignment size. In this case, the horizontal alignment size is a positive integer multiple of any size in the size set, and the vertical alignment size is a positive integer multiple of any size in the size set. In other words, the horizontal alignment size may be equal to or may not be equal to the vertical alignment size. For example, the horizontal alignment size is 16, and the vertical alignment size is 16. This is not limited in this embodiment of this application.

When the target alignment size includes the horizontal alignment size and the vertical alignment size, the size of the text region in the target image includes a height and a width. When the target alignment size is greater than or equal to the size of the text region in the target image, it may be considered that the horizontal alignment size is greater than or equal to the width of the text region in the target image, and that the vertical alignment size is greater than or equal to the height of the text region in the target image.

An implementation of filling the text region in the target image based on the target alignment size to obtain the filled text region includes: determining a filling size based on the target alignment size and the size of the text region in the target image, and filling the text region in the target image based on the filling size, so that a size of the filled text region is consistent with the target alignment size, to obtain the filled text region.

In some embodiments, the target alignment size includes the horizontal alignment size and the vertical alignment size, the size of the text region in the target image includes the height and the width, and the filling size includes a horizontal filling size and a vertical filling size. In this way, a difference between the horizontal alignment size and the width of the text region may be determined as the horizontal filling size, and a difference between the vertical alignment size and the height of the text region may be determined as the vertical filling size.

An implementation of filling the text region in the target image based on the filling size includes: in a horizontal direction (for example, on the left side and/or the right side of the text region, which is not specifically limited) outside the text region, a filling height is the vertical alignment size, and a width is a preset pixel value of the horizontal filling size. In a vertical direction (for example, on the upper side and/or the lower side of the text region, which is not specifically limited) outside the text region, a filling height is the vertical filling size, and a width is a preset pixel value of the horizontal alignment size.

The preset pixel value may be a pixel value of a background pixel other than a character pixel in the text region, or may be a default pixel value, for example, 0 or 255. This is not limited in this embodiment of this application.

It should be noted that, if filling is performed on the left side and the right side of the text region, a sum of filling sizes on the left side and the right side is the horizontal filling size. If filling is performed on the upper side and the lower side of the text region, a sum of filling sizes on the upper side and the lower side is the vertical filling size.

Because there may be one or more text regions in the target image, there may also be one or more filled text regions. When a quantity of filled text regions is different, an implementation of determining the target region based on the filled text region is different, which is separately described below.

If there is one filled text region, the filled text region is used as the target region.

If there are a plurality of filled text regions, the plurality of filled text regions are sequentially concatenated in an order of the plurality of filled text regions in the target image from left to right and from top to bottom, to obtain the target region.

For ease of understanding, the foregoing process of determining the target region is described by using an example.

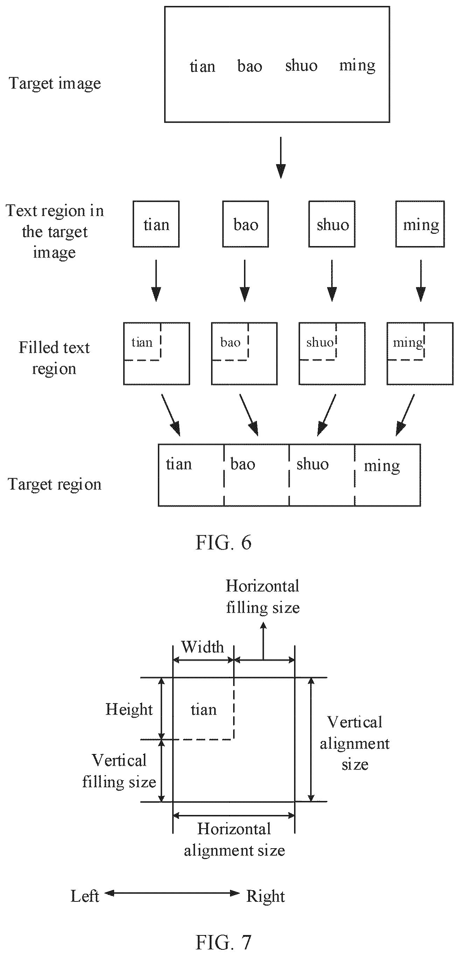

As shown in FIG. 6, the target image includes four characters: "tian", "bao", "shuo", and "ming". Text recognition is performed on the target image by using the text recognition network model, to obtain four text regions. The four text regions are regions corresponding to the four characters: "tian", "bao", "shuo", and "ming". If both the height and the width of the four text regions are 8, both the horizontal alignment size and the vertical alignment size are 16. In this case, a region corresponding to the text "tian" is used as an example. With reference to FIG. 7, both the horizontal filling size and the vertical filling size are 16 - 8 = 8, the right side outside the text region is filled with a preset pixel value with a height of 16 and a width of 8, and the lower side outside the text region is filled with a preset pixel value with a height of 8 and a width of 16, to obtain a filled text region. Then the plurality of filled text regions are sequentially concatenated in an order of the four characters "tian", "bao", "shuo", and "ming" in the target image from left to right and from top to bottom, to obtain the target region in FIG. 6.

It should be noted that the target image may be an independent image, or may be any video frame in a video. This is not limited in this embodiment of this application.

The foregoing description is based on an example in which the target region is a text region obtained by performing alignment processing. In actual application, the target region is still obtained by performing alignment processing on another region with a character attribute in the target image. The character attribute means that a position vector points from a basic unit (that is, a current block or a current basic unit) to another basic unit (that is, a reference block or a reference basic unit) with similar content, and reference basic units corresponding to two adjacent basic units are usually different, and position vectors of the two adjacent basic units are greatly different. In this embodiment of this application, a character may be used as a basic unit. In actual application, any region that is included in the target image and that meets the foregoing character attribute may be used as a basic unit.

For example, the target image includes a plurality of emoticons, and the plurality of emoticons meet the foregoing character attribute, that is, a position vector of emoticon content points from one emoticon (that is, a current block or a current emoticon) to another emoticon (that is, a reference block or a reference emoticon) with similar content, reference emoticons corresponding to two adjacent emoticons are usually different, and position vectors of the two adjacent emoticons are greatly different. In this case, the emoticon may be used as a basic unit, the target region may be obtained by performing alignment processing on an emoticon region in the target image based on the target alignment size, and the emoticon region includes at least one emoticon. For another example, the target image includes a plurality of sub-images, and the plurality of sub-images meet the foregoing character attribute, that is, a position vector of sub-image content points from one sub-image (that is, a current block or a current sub-image) to another sub-image (that is, a reference block or a reference sub-image) with similar content, reference sub-images corresponding to two adjacent sub-images are usually different, and position vectors of the two adjacent sub-images are greatly different. In this case, the sub-image may be used as a basic unit, the target region may be obtained by performing alignment processing on a sub-image region in the target image based on the target alignment size, and the sub-image region includes at least one sub-image.

It should be noted that an implementation of performing alignment processing on the region that has the character attribute in the target image to obtain the target region is similar to the foregoing implementation of performing alignment processing on the text region in the target image to obtain the target region. Details are not described herein again. In addition, because the target region is obtained by performing alignment processing on the region having the character attribute in the target image, there are a plurality of possibilities for the region having the character attribute in the target image. Therefore, for ease of description, an example in which the target region is the text region obtained by performing alignment processing is used in the following description.

In some embodiments, a target non-text region may also be determined. In other words, the text region in the target image is filled with a preset pixel value, to obtain the target non-text region.

**Step 502:** Determine a position vector difference of a current block to be encoded in the target region, where the position vector difference indicates a difference between a position vector of the current block and a reference position vector, and the position vector of the current block indicates a position relationship between the current block and a reference block corresponding to the current block.

Based on the current block to be encoded in the target region, the reference block corresponding to the current block is determined based on a related algorithm. A relative displacement between the current block and the reference block is determined as the position vector of the current block. Based on the position vector of the current block and based on a related predictive coding algorithm, the reference position vector corresponding to the position vector of the current block is determined. A value of the position vector of the current block minus the reference position vector is determined as the position vector difference of the current block.

**Step 503:** Determine, based on the target alignment size and the position vector difference of the current block, position identification data corresponding to the position vector difference and a first flag bit, where the position identification data is a multiple of the position vector difference relative to the target alignment size or is the position vector difference, and the first flag bit indicates a category of the position identification data.

In some embodiments, the position identification data and a value of the first flag bit may be determined based on the target alignment size and the position vector difference.

In some embodiments, the target alignment size includes a horizontal alignment size, the position vector difference includes a horizontal component, the position identification data includes horizontal identification data, the first flag bit includes a horizontal flag bit, and the horizontal flag bit indicates a category of the horizontal identification data. In this case, if the horizontal component is an integer multiple of the horizontal alignment size, a multiple of the horizontal component relative to the horizontal alignment size is determined as the horizontal identification data, and a first value is determined as a value of the horizontal flag bit.

When the horizontal component is the integer multiple of the horizontal alignment size, the multiple of the horizontal component relative to the horizontal alignment size can accurately represent the horizontal component. Therefore, the multiple of the horizontal component relative to the horizontal alignment size is determined as the horizontal identification data. In this way, the horizontal component can be accurately encoded into a bitstream, and accuracy of encoding and decoding the horizontal component is ensured.

Further, if the horizontal component is not an integer multiple of the horizontal alignment size, the horizontal component is determined as the horizontal identification data, and a second value is determined as the value of the horizontal flag bit.

When the horizontal component is not the integer multiple of the horizontal alignment size, the multiple of the horizontal component relative to the horizontal alignment size cannot accurately represent the horizontal component. Therefore, the horizontal component is directly determined as the horizontal identification data, to avoid a horizontal component encoding error caused by encoding the multiple of the horizontal component relative to the horizontal alignment size into the bitstream, thereby ensuring accuracy of encoding and decoding the horizontal component.

In some embodiments, the target alignment size includes a vertical alignment size, the position vector difference includes a vertical component, the position identification data includes vertical identification data, the first flag bit includes a vertical flag bit, and the vertical flag bit indicates a category of the vertical identification data. In this case, if the vertical component is an integer multiple of the vertical alignment size, a multiple of the vertical component relative to the vertical alignment size is determined as the vertical identification data, and a first value is determined as a value of the vertical flag bit.

Similar to the foregoing description, when the vertical component is the integer multiple of the vertical alignment size, the multiple of the vertical component relative to the vertical alignment size can accurately represent the vertical component. Therefore, the multiple of the vertical component relative to the vertical alignment size is determined as the vertical identification data. In this way, the vertical component can be accurately encoded into the bitstream, and accuracy of encoding and decoding the vertical component is ensured.

Further, if the vertical component is not an integer multiple of the vertical alignment size, the vertical component is determined as the vertical identification data, and a second value is determined as the value of the vertical flag bit.

When the vertical component is not the integer multiple of the vertical alignment size, the multiple of the vertical component relative to the vertical alignment size cannot accurately represent the vertical component. Therefore, the vertical component is directly determined as the vertical identification data, to avoid a vertical component encoding error caused by encoding the multiple of the vertical component relative to the vertical alignment size into the bitstream, thereby ensuring accuracy of encoding and decoding the vertical component.

The first value and the second value are preset, and the first value is different from the second value. For example, the first value may be 1, and the second value may be 0. In addition, in different cases, adjustments may be further performed based on different requirements.

In an example, the first value is 1, the second value is 0, both the horizontal alignment size and the vertical alignment size are 16, the horizontal component is 16, and the vertical component is 64. For the horizontal component, 16 ÷ 16 = 1, that is, the horizontal component is an integer multiple of the horizontal alignment size. Therefore, the horizontal identification data is 1, and the value of the horizontal flag bit is 1. For the vertical component, 64 ÷ 16 = 4, that is, the vertical component is an integer multiple of the vertical alignment size. Therefore, the vertical identification data is 4, and the value of the vertical flag bit is 1.

In another example, the first value is 1, the second value is 0, both the horizontal alignment size and the vertical alignment size are 16, the horizontal component is 17, and the vertical component is 64. For the horizontal component, 17 ÷ 16 = 1.0625, that is, the horizontal component is not an integer multiple of the horizontal alignment size. Therefore, the horizontal identification data is 17, and the value of the horizontal flag bit is 0. For the vertical component, 64 ÷ 16 = 4, that is, the vertical component is an integer multiple of the vertical alignment size. Therefore, the vertical identification data is 4, and the value of the vertical flag bit is 1.

It should be noted that, if the position vector difference is not an integer multiple of the target alignment size, in addition to directly using the position vector difference as the position identification data, a quotient obtained by dividing the position vector difference by the target alignment size may also be determined as the position identification data, and a remainder obtained by dividing the position vector difference by the target alignment size may be determined as the first flag bit. In this case, the first value is 0.

When the position vector difference is not an integer multiple of the target alignment size, the remainder obtained by dividing the position vector difference by the target alignment size is definitely not 0. Therefore, the first value may be set to 0. In this way, the first flag bit can still indicate the category of the position identification data. In addition, the position vector difference can be accurately represented by the quotient and the remainder that are obtained by dividing the position vector difference by the target alignment size, and a quantity of bits required for encoding the quotient and the remainder is less than a quantity of bits required for directly encoding the position vector difference. Therefore, even if the position vector difference is not an integer multiple of the target alignment size, accurate encoding of the position vector can be implemented by using a relatively small quantity of bits, thereby improving efficiency of encoding an image including text content while ensuring accuracy of encoding the position vector difference. Certainly, when the position vector difference is not an integer multiple of the target alignment size, the position identification data corresponding to the position vector difference and the first flag bit may alternatively be determined in another manner. This is not limited in this embodiment of this application.

**Step 504:** Encode the position identification data corresponding to the position vector difference and the first flag bit into the bitstream.

In some embodiments, residual information of the current block may also be encoded into the bitstream, and the residual information indicates a prediction residual between the current block and the reference block.

Optionally, edge information may also be encoded into the bitstream, and the edge information includes the target alignment size. Further, the edge information further includes the position of the text region in the target image. For example, the position of the text region in the target image may be a horizontal coordinate and a vertical coordinate of a pixel in an upper left corner, a lower left corner, an upper right corner, or a lower right corner of the text region in the target image. Certainly, the position of the text region in the target image may also be other coordinates that are in the text region and that can be used to determine the position of the text region in the target image. This is not limited in this embodiment of this application. During decoding, the text region can be reconstructed from a reconstructed image based on the position of the text region in the target image, thereby improving decoding efficiency.

It should be noted that, when the target alignment size includes the horizontal alignment size and the vertical alignment size, if the horizontal alignment size is equal to the vertical alignment size, when the target alignment size is encoded into the bitstream, there is no need to encode both the horizontal alignment size and the vertical alignment size into the bitstream, and only one of the horizontal alignment size and the vertical alignment size needs to be encoded into the bitstream. In this way, a quantity of bits required for encoding the edge information can be effectively reduced, and encoding efficiency is effectively improved.

In some embodiments, the edge information may be encoded into the bitstream in a differential encoding mode, the residual information of the current block may be encoded into the bitstream in an entropy coding mode, the first flag bit may be encoded into the bitstream in a binary encoding mode, and the position identification data may be encoded into the bitstream in an exponential Golomb coding mode. Optionally, when the target non-text region is determined, the target non-text region may also be encoded into the bitstream. Certainly, in actual application, the foregoing information may alternatively be encoded into the bitstream in another encoding mode. This is not limited in this embodiment of this application.

In an example, when the position vector difference is an MVD, an encoding syntax element corresponding to the encoding method is shown in Table 1.

Table 1

| mvd_coding(x0,y0) { | **Descriptor** |
|---|---|
| **abs_mvd_greater0_flag[0]** | ae(v) |
| **abs_mvd_greater0_flag[1]** | ae(v) |
| mvd_coding(x0,y0) { | **Descriptor** |
| if(abs_mvd_greater0_flag[0]) | |
| **abs_mvd_greater1_flag[0]** | ae(v) |
| if(abs_mvd_greater0_flag[1]) | |
| **abs_mvd_greater1_flag[1]** | ae(v) |
| if(abs_mvd_greater0_flag[0]) | |
| **mvd_ada_precision_flag[0]** | ae(v) |
| if(abs_mvd_greater0_flag[1]) | |
| **mvd_ada_precision_flag[1]** | ae(v) |
| if(abs_mvd_greater0_flag[0]){ | |
| **mvd_sign_flag[0]** | ae(v) |
| if(abs_mvd_greater]_flag[0]) | |
| **abs_mvd_minus2[0]** | ae(v) |
| } | |

(continued)

| if(abs_mvd_greater0 flag[1]){ | |
|---|---|
| **mvd_sign_flag[1]** | ae(v) |
| if(abs_mvd_greater1_flag[1]) | |
| **abs_mvd_minus2[1]** | ae(v) |
| } | |
| } | |

As shown in Table 1, mvd_coding(x0, y0) indicates that the position vector difference of the current block with coordinates (x0, y0) is encoded.

Original syntax of abs _mvd_greater0_flag[0] and abs_mvd_greater0_flag[1] is abs_mvd_greater0_flag[compIdx]. abs _mvd_greater0_flag[compIdx] can indicate whether an absolute value of the position identification data is greater than 0, and abs _mvd_greater0_flag[compIdx] may be 1 or 0. If the absolute value of the position identification data is greater than 0, abs_mvd_greater0_flag[compIdx] is 1, and 1 is encoded into the bitstream; otherwise, abs_mvd_greater0_flag[compIdx] is 0, and 0 is encoded into the bitstream. When the position identification data includes the horizontal identification data and the vertical identification data, compIdx may be 0 or 1. When compIdx is 0, it indicates the horizontal identification data; or when compIdx is 1, it indicates the vertical identification data. Therefore, abs_mvd_greater0_flag[0] indicates whether an absolute value of the horizontal identification data is greater than 0. When the absolute value of the horizontal identification data is greater than 0, 1 is encoded into the bitstream; otherwise, 0 is encoded into the bitstream. abs_mvd_greater0_flag[1] indicates whether an absolute value of the vertical identification data is greater than 0. When the absolute value of the vertical identification data is greater than 0, 1 is encoded into the bitstream; otherwise, 0 is encoded into the bitstream.

Original syntax of abs_mvd_greater1_flag[0] and abs_mvd_greater1_flag[1] is abs_mvd_greater1_flag[compIdx]. abs _mvd_greater1_flag[compIdx] can indicate whether the absolute value of the position identification data is greater than 1, and abs _mvd_greater_flag[compIdx] may be 1 or 0. If the absolute value of the position identification data is greater than 1, abs_mvd_greater1_flag[compIdx] is 1, and 1 is encoded into the bitstream; otherwise, abs_mvd_greater1_flag[compIdx] is 0, and 0 is encoded into the bitstream. When the position identification data includes the horizontal identification data and the vertical identification data, compIdx may be 0 or 1. When compIdx is 0, it indicates the horizontal identification data; or when compIdx is 1, it indicates the vertical identification data. Therefore, abs_mvd_greater1_flag[0] indicates whether the absolute value of the horizontal identification data is greater than 1. When the absolute value of the horizontal identification data is greater than 1, 1 is encoded into the bitstream; otherwise, 0 is encoded into the bitstream. abs_mvd_greater1_flag[1] indicates whether the absolute value of the vertical identification data is greater than 1. When the absolute value of the vertical identification data is greater than 1, 1 is encoded into the bitstream; otherwise, 0 is encoded into the bitstream.

if(abs _mvd_greater0_flag[0]) abs _mvd_greater1_flag[0] indicates that when the absolute value of the horizontal identification data is greater than 0, that is, when abs _mvd_greater0_flag[0] is 1, it is determined whether the absolute value of the horizontal identification data is greater than 1; and if the absolute value of the horizontal identification data is greater than 1, abs _mvd_greater1_flag[0] is 1, and 1 is encoded into the bitstream; otherwise, abs_mvd_greater1_flag[0] is 0, and 0 is encoded into the bitstream.

A meaning of if(abs _mvd_greater0_flag[1]) abs_mvd_greater1_flag[1] is similar to a meaning of the foregoing if(abs_mvd_greater0_flag[0]) abs_mvd_greater1_flag[0]. For detailed content, refer to the foregoing related content. Details are not described herein again.

Original syntax of mvd_ada_precision_flag[0] and mvd_ada_precision_flag[1] is mvd_ada_precision_flag[compIdx]. mvd_ada_precision_flag[compIdx] indicates whether the first flag bit is equal to 1. mvd_ada_precision_flag[compIdx] may be 1 or 0. If the first flag bit is equal to 1, mvd_ada_precision_flag[compIdx] is 1, and 1 is encoded into the bitstream; otherwise, mvd_ada_precision_flag[compIdx] is 0, and 0 is encoded into the bitstream. When the first flag bit includes the horizontal flag bit and the vertical flag bit, compIdx may be 0 or 1. When compIdx is 0, it indicates the horizontal flag bit; or when compIdx is 1, it indicates the vertical flag bit. Therefore, mvd_ada_precision_flag[0] indicates whether the horizontal flag bit is equal to 1. When the horizontal flag bit is equal to 1, 1 is encoded into the bitstream; otherwise, 0 is encoded into the bitstream. mvd_ada_precision_flag[1] indicates whether the vertical flag bit is equal to 1. When the vertical flag bit is equal to 1, 1 is encoded into the bitstream; otherwise, 0 is encoded into the bitstream.

if(abs _mvd_greater0_flag[0]) mvd _ada_precision flag[0] indicates that when the absolute value of the horizontal identification data is greater than 0, that is, when abs_mvd_greater0_flag[0] is 1, it is determined whether the horizontal flag bit is equal to 1. If the horizontal flag bit is equal to 1, mvd_ada_precision_flag[0] is 1, and 1 is encoded into the bitstream; otherwise, mvd_ada_precision_flag[0] is 0, and 0 is encoded into the bitstream.

17

A meaning of if(abs _mvd_greater0_flag[1]) mvd_ada_precision_flag[1] is similar to a meaning of the foregoing if(abs _mvd_greater0_flag[0]) mvd_ada_precision_flag[0]. For detailed content, refer to the foregoing related content. Details are not described herein again.

Original syntax of mvd_sign_flag[0] and mvd_sign_flag[1] is mvd_sign_flag[compIdx]. mvd_sign_flag[compIdx] indicates whether the position identification data is positive or negative. mvd_sign_flag[compIdx] may be 1 or 0. If the position identification data is a positive value, it is determined that mvd_sign_flag[compIdx] is equal to 0, and 0 is encoded into the bitstream. If the position identification data is a negative value, it is determined that mvd_sign_flag[compIdx] is equal to 1, and 1 is encoded into the bitstream. When the position identification data includes the horizontal identification data and the vertical identification data, compIdx may be 0 or 1. When compIdx is 0, it indicates the horizontal identification data; or when compIdx is 1, it indicates the vertical identification data. Therefore, mvd_sign_flag[0] indicates whether the horizontal identification data is positive or negative. When the horizontal identification data is a positive value, 0 is encoded into the bitstream; otherwise, 1 is encoded into the bitstream. mvd_sign_flag[1] indicates whether the vertical identification data is positive or negative. When the vertical identification data is a positive value, 0 is encoded into the bitstream; otherwise, 1 is encoded into the bitstream.

Original syntax of abs_mvd_minus2[0] and abs_mvd_minus2[1] is abs_mvd_minus2 [compIdx]. abs_mvd_minus2 [compIdx] indicates a value obtained by subtracting 2 from the absolute value of the position identification data, that is, the value obtained by subtracting 2 from the absolute value of the position identification data is encoded into the bitstream. When the position identification data includes the horizontal identification data and the vertical identification data, compIdx may be 0 or 1. When compIdx is 0, it indicates the horizontal identification data; or when compIdx is 1, it indicates the vertical identification data. Therefore, abs_mvd_minus2[0] indicates a value obtained by subtracting 2 from the absolute value of the horizontal identification data. abs_mvd_minus2[1] indicates a value obtained by subtracting 2 from the absolute value of the vertical identification data.

if(abs _mvd_greater0_flag[0]) { mvd _sign flag[0] if(abs_mvd_greater1_flag[0]) abs_mvd _minus2[0] } indicates that when the absolute value of the horizontal identification data is greater than 0, that is, when abs _mvd_greater0_flag[0] is 1, it is determined whether the horizontal identification data is positive or negative; and when the horizontal identification data is a positive value, 0 is encoded into the bitstream; otherwise, 1 is encoded into the bitstream. In addition, when the absolute value of the horizontal identification data is greater than 1, that is, when abs_mvd_greater1_flag[0] is 1, the value obtained by subtracting 2 from the absolute value of the horizontal identification data is determined, and the value obtained by subtracting 2 from the absolute value of the horizontal identification data is encoded into the bitstream.

A meaning of if(abs_mvd_greater0_flag[1]) { mvd_sign_flag[1] if(abs_mvd_greater1_flag[1]) abs_mvd_minus2 [1] } is similar to a meaning of the foregoing if(abs_mvd_greater0_flag[0]) { mvd_sign_flag[0] if(abs_mvd_greater1_flag[0]) abs_mvd_minus2[0] }. For detailed content, refer to the foregoing related content. Details are not described herein again.

For the target image including text content, after alignment processing is performed on the text region in the target image based on the target alignment size to obtain the target region, the vertical component and the horizontal component can be separately encoded based on the target alignment size. When the position vector difference is the integer multiple of the target alignment size, the multiple of the position vector difference relative to the target alignment size is used as the position identification data and encoded into the bitstream. The multiple of the position vector difference relative to the target alignment size can accurately represent the position vector difference, and a quantity of bits required for encoding the integer multiple is less than the quantity of bits required for directly encoding the position vector difference of the current block. Therefore, encoding the multiple of the position vector difference relative to the target alignment size into the bitstream as the position identification data can effectively reduce the quantity of bits required for encoding the position vector difference while ensuring accuracy of encoding the position vector difference, thereby ensuring relatively high efficiency of encoding the image including text content.

In this embodiment of this application, if the position vector difference is not the integer multiple of the target alignment size, the quotient obtained by dividing the position vector difference by the target alignment size may also be determined as the position identification data, and the remainder obtained by dividing the position vector difference by the target alignment size may be determined as the first flag bit. The position vector difference can be accurately represented by the quotient and the remainder that are obtained by dividing the position vector difference by the target alignment size, and the quantity of bits required for encoding the quotient and the remainder is less than the quantity of bits required for directly encoding the position vector difference. Therefore, even if the position vector difference is not the integer multiple of the target alignment size, accurate encoding of the position vector can be implemented by using a relatively small quantity of bits, thereby improving efficiency of encoding the image including text content while ensuring accuracy of encoding the position vector difference.

In addition, the encoding method provided in this embodiment of this application can be combined with a standard video encoding method without affecting a standard video encoding procedure. In other words, the encoding method provided in this embodiment of this application has relatively strong portability and can improve efficiency of encoding the image including text content without adding additional hardware costs.

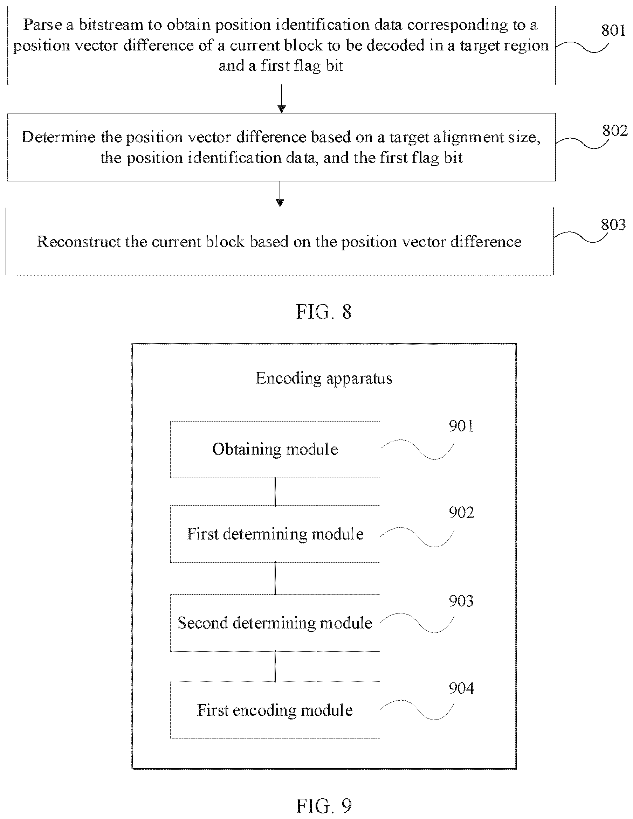

FIG. 8 is a flowchart of a first decoding method according to an embodiment of this application. The decoding method corresponds to the encoding method shown in FIG. 5. With reference to FIG. 8, the method includes the following steps.

**Step 801:** Parse a bitstream to obtain position identification data corresponding to a position vector difference of a current block to be decoded in a target region and a first flag bit.

The position vector difference indicates a difference between a position vector of the current block and a reference position vector, the position vector of the current block indicates a position relationship between the current block and a reference block corresponding to the current block, the position identification data is a multiple of the position vector difference relative to a target alignment size or is the position vector difference, and the first flag bit indicates a category of the position identification data.

**Step 802**: Determine the position vector difference based on the target alignment size, the position identification data, and the first flag bit.

In some embodiments, when edge information includes the target alignment size, and the edge information is encoded into the bitstream, the bitstream may be further parsed to obtain the edge information, to obtain the target alignment size.

In some other embodiments, an encoder and a decoder store the target alignment size, that is, the target alignment size is determined by the encoder and the decoder in advance. In this case, the decoder can directly obtain the target alignment size, and there is no need to encode the target alignment size into the bitstream, thereby effectively reducing a quantity of bits of the bitstream, reducing a required decoding time, and effectively improving decoding efficiency.

In some embodiments, the position vector difference may be determined based on a value of the first flag bit by using the target alignment size and the position identification data.

In some embodiments, the target alignment size includes a horizontal alignment size, the position vector difference includes a horizontal component, the position identification data includes horizontal identification data, the first flag bit includes a horizontal flag bit, and the horizontal flag bit indicates a category of the horizontal identification data. In this case, if a value of the horizontal flag bit is a first value, the horizontal alignment size is multiplied by the horizontal identification data to obtain the horizontal component. If the value of the horizontal flag bit is a second value, the horizontal identification data is determined as the horizontal component.

When the value of the horizontal flag bit is the first value, it indicates that the horizontal identification data is a multiple of the horizontal component relative to the horizontal alignment size. Therefore, the horizontal alignment size is multiplied by the horizontal identification data to obtain the horizontal component. When the value of the horizontal flag bit is the second value, it indicates that the horizontal identification data is the horizontal component. Therefore, the horizontal identification data may be directly determined as the horizontal component.

In some other embodiments, the target alignment size includes a vertical alignment size, the position vector difference includes a vertical component, the position identification data includes vertical identification data, the first flag bit includes a vertical flag bit, and the vertical flag bit indicates a category of the vertical identification data. In this case, if a value of the vertical flag bit is a first value, the vertical alignment size is multiplied by the vertical identification data to obtain the vertical component. If the value of the vertical flag bit is a second value, the vertical identification data is determined as the vertical component.

Similar to the foregoing description, when the value of the vertical flag bit is the first value, it indicates that the vertical identification data is a multiple of the vertical component relative to the vertical alignment size. Therefore, the vertical alignment size is multiplied by the vertical identification data to obtain the vertical component. When the value of the vertical flag bit is the second value, it indicates that the vertical identification data is the vertical component. Therefore, the vertical identification data may be directly determined as the vertical component.

In an example, both the horizontal alignment size and the vertical alignment size are 16, both the horizontal flag bit and the vertical flag bit are 1, the horizontal identification data is 1, and the vertical identification data is 4. In this case, the horizontal component is equal to the horizontal identification data multiplied by the horizontal alignment size, that is, 16. The vertical component is equal to the vertical identification data multiplied by the vertical alignment size, that is, 64.

In another example, both the horizontal alignment size and the vertical alignment size are 16, the horizontal flag bit is 0, the vertical flag bit is 1, the horizontal identification data is 17, and the vertical identification data is 4. In this case, the horizontal component is equal to the horizontal identification data, that is, 17. The vertical component is equal to the vertical identification data multiplied by the vertical alignment size, that is, 64.

Based on the foregoing description, in an encoding process, if the position vector difference is not an integer multiple of the target alignment size, a quotient obtained by dividing the position vector difference by the target alignment size is determined as the position identification data, and a remainder obtained by dividing the position vector difference by the target alignment size is determined as the value of the first flag bit. Correspondingly, in a decoding process, if the first flag bit is not 0, the position identification data may be multiplied by the target alignment size and then added to the value of the first flag bit, to obtain the position vector difference.

**Step 803:** Reconstruct the current block based on the position vector difference of the current block.

In some embodiments, the bitstream may be further parsed to obtain residual information of the current block, and the residual information indicates a prediction residual between the current block and the reference block. In this case, the current block may be reconstructed based on the position vector difference and the residual information.

The position vector of the current block is determined based on the position vector difference and a related algorithm. The current block is reconstructed based on the position vector of the current block and the residual information of the current block and based on the related algorithm, to reconstruct the target region.

Optionally, when a target non-text region is encoded into the bitstream, the target non-text region may also be reconstructed based on the bitstream, to obtain a reconstructed target non-text region.

Optionally, after the target region is reconstructed, a target image may also be reconstructed based on the target region and the target non-text region.

An implementation process of reconstructing the target image based on the target region and the target non-text region includes: determining a text region in the target image based on the target region, and reconstructing the target image based on the text region and the target non-text region in the target image.

Optionally, the target region may be recognized by using a text recognition network model, to obtain the text region in the target image. In other words, the target region is used as an input of the text recognition network model, and the text recognition network model can output the text region in the target region based on the target region. Certainly, in actual application, the text region may alternatively be reconstructed in another manner. This is not limited in this embodiment of this application.

Optionally, the edge information further includes a position of the text region in the target image. In this case, a region that is in the target non-text region and that is in a same position as the text region may be replaced with the text region, to obtain the reconstructed target image. Certainly, in actual application, the target image may alternatively be determined in another manner. This is not limited in this embodiment of this application.

In an example, when the position vector difference is an MVD, a decoding syntax element corresponding to the decoding method is shown in Table 2.

Table 2

| mvd_decoding (x0,y0){ | Descriptor |
|---|---|
| **abs_mvd_greater0 flag[0]** | ae(v) |
| **abs_mvd_greater0 flag[1]** | ae(v) |
| if(abs_mvd_greater0_flag[0]) | |
| **abs_mvd_greater1_flag[0]** | ae(v) |
| if(abs_mvd_greater0_flag[1]) | |
| **abs_mvd_greater1_flag[1]** | ae(v) |
| if(abs_mvd_greater0_flag[0]) | |
| **mvd_ada_precision_flag[0]** | ae(v) |
| if(abs_mvd_greater0_flag[1]) | |
| **mvd_ada_precision_flag[1]** | ae(v) |
| if(abs_mvd_greater0_flag[0]){ | |
| if(abs_mvd_greater1_flag[0]) | |
| **abs_mvd_minus2[0]** | ae(v) |
| if(mvd_ada_precision_flag[0]) | |
| abs_mvd_org[0]=(abs_mvd_minus2[0]+2)<<align_shift_x | |
| else | |
| abs_mvd_org[0]=abs_mvd_minus2[0]+2 | |
| **mvd_sign_flag[0]** | ae(v) |
| } | |
| if(abs_mvd_greater0_flag[1]){ | |
| if(abs_mvd_greater1_flag[1]) | |
| **abs_mvd_minus2[1]** | ae(v) |

(continued)

| | Descriptor |
|---|---|
| if(mvd_ada_precision_flag[1]) | |
| abs_mvd_org[1]=(abs_mvd_minus2[1]+2)<<align_shift_y | |
| else | |
| abs_mvd_org[1]=abs_mvd_minus2[1}+2 | |
| mvd_decoding (x0,y0){ | **Descriptor** |
| **mvd_sign_flag[1]** | ae(v) |
| } | |
| } | |

As shown in Table 2, mvd _decoding(x0, y0) indicates that the position vector difference of the current block with coordinates (x0, y0) is decoded.

Original syntax of abs_mvd_org[0] and abs_mvd_org[1] is abs_mvd_org[compIdx]. abs_mvd_org[compIdx] indicates an absolute value of the position vector difference. When the position identification data includes the horizontal identification data and the vertical identification data, compIdx may be 0 or 1. When compIdx is 0, it indicates the horizontal identification data; or when compIdx is 1, it indicates the vertical identification data. Therefore, abs_mvd_org[0] indicates an absolute value of the horizontal identification data. abs_mvd_org[1] indicates an absolute value of the vertical identification data.

When the target alignment size includes the horizontal alignment size and the vertical alignment size, align_shift_x represents a quantity of shift bits corresponding to the horizontal alignment size, and align_shift_y represents a quantity of shift bits corresponding to the vertical alignment size. The target alignment size is encoded into the bitstream as the edge information, and the quantity of shift bits corresponding to the target alignment size is related to the target alignment size. Therefore, when the target alignment size is encoded into the bitstream, it may be considered that the quantity of shift bits of the target alignment size is encoded into the bitstream. In this way, when the position vector difference is encoded, the quantity of shift bits corresponding to the target alignment size does not need to be encoded.

The quantity of shift bits corresponding to the target alignment size is related to a quantity of binary bits of the target alignment size. Optionally, the quantity of shift bits corresponding to the target alignment size is equal to the quantity of binary bits of the target alignment size minus 1. Certainly, the quantity of shift bits corresponding to the target alignment size may alternatively be determined in another manner. This is not limited in this embodiment of this application.

Other syntax that is in Table 2 and that is similar to the syntax in Table 1 is not described herein again. For detailed content, refer to related content corresponding to Table 1.

The following describes the decoding process shown in Table 2.

abs_mvd_greater0_flag[0] and abs_mvd_greater0_flag[1] indicate that values of abs _mvd_greater0_flag[0] and abs _mvd_greater0_flag[1] are obtained by parsing the bitstream.

if( abs _mvd_greater0_flag[0] ) abs_mvd_greater1_flag[0] indicates that if the value of abs _mvd_greater0_flag[0] is 1, the value of abs_mvd_greater1_flag[0] is obtained by parsing the bitstream; otherwise, it is determined that the horizontal identification data is 0.

if( abs_mvd_greater0_flag[1] ) abs_mvd_greater1_flag[1] indicates that if the value of abs_mvd_greater0_flag[1] is 1, the value of abs_mvd_greater1_flag[1] is obtained by parsing the bitstream; otherwise, it is determined that the vertical identification data is 0.

if( abs_mvd_greater0_flag[0] ) mvd_ada_precision_flag[0] indicates that if the value of abs _mvd_greater0_flag[0] is 1, a value of mvd_ada_precision_flag[0] is obtained by parsing the bitstream; otherwise, it is determined that the horizontal identification data is 0.

if( abs_mvd_greater0_flag[1] ) mvd_ada_precision_flag[1] indicates that if the value of abs_mvd_greater0_flag[1] is 1, a value of mvd _ada_precision_flag[1] is obtained by parsing the bitstream; otherwise, it is determined that the vertical identification data is 0.

Syntax of the 12th row to the 20th row in Table 2 indicates that if the value of abs _mvd_greater0_flag[0] is 1, and the value of abs _mvd_greater1_flag[0] is 1, a value of abs_mvd_minus2[0] is obtained by parsing the bitstream. If mvd_ada_precision_flag[0] is 1, a binary number of a value obtained by adding 2 to abs_mvd_minus2[0] is determined, and a value obtained by left-shifting the binary number by the quantity of shift bits corresponding to the horizontal alignment size is determined as abs_mvd_org[0]. If mvd _ada_precision_ flag[0] is 0, the value obtained by adding 2 to abs_mvd_minus2[0] is determined as abs_mvd_org[0]. A value of mvd _sign flag[0] is obtained by parsing the bitstream.

Meanings of syntax of the 21st row to the 29th row in Table 2 are similar to meanings of the syntax of the 12th row to the 20th row in Table 2. For detailed content, refer to the foregoing related content. Details are not described herein again.

When the position identification data includes the horizontal identification data and the vertical identification data, based on the decoding syntax shown in Table 2, in the decoding process, a value of the position vector difference may be calculated by using the following expression (1):

$$Mvd[compIdx]=abs\_mvd\_greater0\_flag[compIdx] * abs\_mvd\_org[compIdx] * (1\text{-}2 * mvd\_sign\_flag[compIdx]) \qquad (1)$$

In the foregoing expression (1), Mvd[compIdx] represents a value of the horizontal component or the vertical component, abs_mvd_greater0_flag[compIdx] represents a value of abs_mvd_greater0_flag[compIdx] obtained by parsing the bitstream, abs_mvd_org[compIdx] represents the absolute value of the horizontal identification data or the absolute value of the vertical identification data, and mvd_sign_flag[compIdx] represents a value corresponding to mvd_sign_flag[compIdx] obtained by parsing the bitstream.

Because encoding the multiple of the position vector difference relative to the target alignment size requires fewer bits than encoding the position vector difference of the current block, when the first flag bit is the first value, efficiency of decoding the position identification data is higher than efficiency of decoding the position vector difference. In this way, efficiency of decoding the image including text content can be improved while decoding accuracy is ensured. In addition, in the decoding process, if the position vector difference is not the integer multiple of the target alignment size, the quotient obtained by dividing the position vector difference by the target alignment size is determined as the position identification data, and the remainder obtained by dividing the position vector difference by the target alignment size is determined as the value of the first flag bit. Because encoding the quotient and the remainder obtained by dividing the position vector difference by the target alignment size requires fewer bits than encoding the position vector difference of the current block, when the first flag bit is not the first value, efficiency of decoding the position identification data is also higher than efficiency of decoding the position vector difference. In this way, efficiency of decoding the image including text content can be improved while decoding accuracy is ensured.

The decoding method provided in this embodiment of this application can be combined with a standard video decoding method without affecting a standard video decoding procedure. In other words, the decoding method provided in this embodiment of this application has relatively strong portability and can improve efficiency of decoding the image including text content without adding additional hardware costs.

An embodiment of this application further provides a second encoding method. The method includes the following steps.

**Step 901:** Obtain a target region, where the target region is obtained by performing alignment processing on a target image based on a target alignment size.

For an implementation of obtaining the target region, refer to related content in the foregoing first encoding method. Details are not described herein again.

**Step 902:** Determine a position vector difference of a current block to be encoded in the target region, where the position vector difference indicates a difference between a position vector of the current block and a reference position vector, and the position vector of the current block indicates a position relationship between the current block and a reference block corresponding to the current block.

For an implementation of determining the position vector difference of the current block to be encoded in the target region, refer to related content in the foregoing first encoding method. Details are not described herein again.

**Step 903:** Determine, based on the target alignment size and the position vector difference of the current block, position identification data corresponding to the position vector difference and a first flag bit, where the position identification data is a multiple of the position vector difference relative to the target alignment size or is the position vector difference, and the first flag bit indicates a category of the position identification data.

In some embodiments, the position identification data and a value of the first flag bit may be determined based on the target alignment size and the position vector difference.

In some embodiments, the target alignment size includes a horizontal alignment size and a vertical alignment size, the position vector difference includes a horizontal component and a vertical component, and the position identification data includes horizontal identification data and vertical identification data. In this case, a multiple of the horizontal component relative to the horizontal alignment size is determined as the horizontal identification data, a multiple of the vertical component relative to the vertical alignment size is determined as the vertical identification data, and a first value is determined as the value of the first flag bit.

Further, if the horizontal component is an integer multiple of the horizontal alignment size, and the vertical component is an integer multiple of the vertical alignment size, the multiple of the horizontal component relative to the horizontal alignment size is determined as the horizontal identification data, the multiple of the vertical component relative to the vertical alignment size is determined as the vertical identification data, and the first value is determined as the value of the first flag bit.

When the horizontal component is the integer multiple of the horizontal alignment size and the vertical component is the integer multiple of the vertical alignment size, the multiple of the horizontal component relative to the horizontal alignment size can accurately represent the horizontal component, and the multiple of the vertical component relative to the vertical alignment size can also accurately represent the vertical component. Therefore, the multiple of the horizontal component relative to the horizontal alignment size can be determined as the horizontal identification data, and the multiple of the vertical component relative to the vertical alignment size can be determined as the vertical identification data. In this way, the horizontal component and the vertical component can be accurately encoded into a bitstream, and accuracy of encoding and decoding the horizontal component and the vertical component is ensured.

Further, if the horizontal component is not an integer multiple of the horizontal alignment size, and/or the vertical component is not an integer multiple of the vertical alignment size, the horizontal component is determined as the horizontal identification data, the vertical component is determined as the vertical identification data, and a second value is determined as the value of the first flag bit.

When the horizontal component is not the integer multiple of the horizontal alignment size, and/or the vertical component is not the integer multiple of the vertical alignment size, the multiple of the horizontal component relative to the horizontal alignment size cannot accurately represent the horizontal component, and/or the multiple of the vertical component relative to the vertical alignment size cannot accurately represent the vertical component. Therefore, the horizontal component can be directly determined as the horizontal identification data, and the vertical component can be determined as the vertical identification data, to avoid a horizontal component encoding error caused by encoding the multiple of the horizontal component relative to the horizontal alignment size into the bitstream, and/or a vertical component encoding error caused by encoding the multiple of the vertical component relative to the vertical alignment size into the bitstream, thereby ensuring accuracy of encoding and decoding the horizontal component and the vertical component.

The first value and the second value are preset, and the first value is different from the second value. For example, the first value may be 1, and the second value may be 0. In addition, in different cases, adjustments may be further performed based on different requirements.

In an example, the first value is 1, the second value is 0, both the horizontal alignment size and the vertical alignment size are 16, the horizontal component is 16, and the vertical component is 64. For the horizontal component, 16 ÷ 16 = 1, and for the vertical component, 64 ÷ 16 = 4. In other words, the horizontal component is an integer multiple of the horizontal alignment size, and the vertical component is an integer multiple of the vertical alignment size. Therefore, the horizontal identification data is 1, the vertical identification data is 4, and the value of the first flag bit is 1.

In an example, the first value is 1, the second value is 0, both the horizontal alignment size and the vertical alignment size are 16, the horizontal component is 17, and the vertical component is 64. For the horizontal component, 17 ÷ 16 = 1.0625, and for the vertical component, 64 ÷ 16 = 4. In other words, the horizontal component is not an integer multiple of the horizontal alignment size. Therefore, the horizontal identification data is 17, the vertical identification data is 64, and the value of the first flag bit is 0.

It should be noted that, if the horizontal component is not an integer multiple of the horizontal alignment size, and/or the vertical component is not an integer multiple of the vertical alignment size, in addition to directly determining the horizontal component as the horizontal identification data and determining the vertical component as the vertical identification data, a quotient obtained by dividing the horizontal component by the horizontal alignment size may also be determined as the horizontal identification data. A quotient and a remainder obtained by dividing the vertical component by the vertical alignment size are determined as the vertical identification data, and the second value is determined as the value of the first flag bit. In this case, the first flag bit is used to distinguish between two different manners of determining the position identification data.

The position vector difference can be accurately represented by a quotient and a remainder that are obtained by dividing the position vector difference by the target alignment size, and a quantity of bits required for encoding the quotient and the remainder is less than a quantity of bits required for directly encoding the position vector difference. Therefore, even if the position vector difference is not the integer multiple of the target alignment size, accurate encoding of the position vector can be implemented by using a relatively small quantity of bits, thereby improving efficiency of encoding the image including text content while ensuring accuracy of encoding the position vector difference. Certainly, when the horizontal component is not the integer multiple of the horizontal alignment size, and/or the vertical component is not the integer multiple of the vertical alignment size, the position identification data and the first flag bit may alternatively be determined in another manner. This is not limited in this embodiment of this application.

**Step 904:** Encode the position identification data corresponding to the position vector difference and the first flag bit into the bitstream.

For an implementation of encoding the position identification data corresponding to the position vector difference and the first flag bit into the bitstream, refer to related content in the foregoing first encoding method. Details are not described herein again.

In an example, when the position vector difference is an MVD, an encoding syntax element corresponding to the second encoding method is shown in Table 3.

Table 3

| mvd_coding(x0,y0) { | Descriptor |
|---|---|
| **abs_mvd_greater0_flag[0]** | ae(v) |
| **abs_mvd_greater0_flag[1]** | ae(v) |
| if(abs_mvd_greater0_flag[0]) | |
| **abs_mvd_greater1_flag [0]** | ae(v) |
| if(abs_mvd_greater0_flag[1]) | |
| **abs_mvd_greater1_flag[1]** | ae(v) |
| if(abs_mvd_greater0_flag[0]‖abs_mvd_greater0_flag[1]) | |
| **mvd_ada_precision_flag** | ae(v) |
| if(abs_mvd_greater0_flag[0]){ | |
| **mvd_sign_flag[0]** | ae(v) |
| if(abs_mvd_greater1_flag[0]) | |
| **abs_mvd_minus2[0]** | ae(v) |
| } | |
| mvd_coding(x0,y0) { | Descriptor |
| if(abs_mvd_greater0_flag[1]){ | |
| **mvd_sign_flag[1]** | ae(v) |
| if(abs_mvd_greater1_flag[1]) | |
| **abs_mvd_minus2[1]** | ae(v) |
| } | |
| } | |

In the foregoing Table 3, mvd _ada_precision _flag indicates whether the first flag bit is equal to 1. mvd_ada_precision_flag may be 1 or 0. If the first flag bit is equal to 1, mvd_ada_precision_flag is 1, and 1 is encoded into the bitstream; otherwise, mvd _ada_precision _flag is 0, and 0 is encoded into the bitstream.

if(abs _mvd_greater0_flag[0]‖abs_mvd_greater0_flag[1]) mvd_ada_precision_flag indicates that when an absolute value of the horizontal identification data is greater than 0 and an absolute value of the vertical and horizontal identification data is greater than 0, that is, when abs _mvd_greater0_flag[0] is 1, and abs _mvd_greater0_flag[1] is 1, it is determined whether the first flag bit is equal to 1. If the first flag bit is equal to 1, mvd_ada_precision_flag is 1, and 1 is encoded into the bitstream; otherwise, mvd_ada_precision_flag is 0, and 0 is encoded into the bitstream.

Other syntax that is in Table 3 and that is similar to the syntax in Table 1 is not described herein again. For detailed content, refer to related content corresponding to Table 1.

For the target image including text content, after alignment processing is performed on the target image based on the target alignment size to obtain the target region, when the vertical component is the integer multiple of the vertical alignment size and the horizontal component is the integer multiple of the horizontal alignment size, integer the multiples corresponding to the horizontal component and the vertical component are used as the position identification data and encoded into the bitstream. The multiple of the position vector difference relative to the target alignment size can accurately represent the position vector difference, and a quantity of bits required for encoding the multiple of the position vector difference relative to the target alignment size is less than the quantity of bits required for directly encoding the position vector difference of the current block. Therefore, encoding the position identification data corresponding to the position vector difference into the bitstream can effectively reduce the quantity of bits required for encoding the position vector difference while ensuring accuracy of encoding the position vector difference, thereby ensuring relatively high efficiency of encoding the image including text content.

In this embodiment of this application, if the horizontal component is not the integer multiple of the horizontal alignment size, and/or the vertical component is not the integer multiple of the vertical alignment size, the quotient and the remainder obtained by dividing the horizontal component by the horizontal alignment size may also be determined as the horizontal identification data. The quotient and the remainder obtained by dividing the vertical component by the vertical alignment size are determined as the vertical identification data, and the second value is determined as the value of the first flag bit. The position vector difference can be accurately represented by the quotient and the remainder that are obtained by dividing the position vector difference by the target alignment size, and the quantity of bits required for encoding the quotient and the remainder is less than the quantity of bits required for directly encoding the position vector difference. Therefore, even if the position vector difference is not the integer multiple of the target alignment size, accurate encoding of the position vector can be implemented by using a relatively small quantity of bits, thereby improving efficiency of encoding the image including text content while ensuring accuracy of encoding the position vector difference.

**In** addition, the encoding method provided in this embodiment of this application can be combined with a standard video encoding method without affecting a standard video encoding procedure. In other words, the encoding method provided in this embodiment of this application has relatively strong portability and can improve efficiency of encoding the image including text content without adding additional hardware costs.

An embodiment of this application further provides a second decoding method. The decoding method corresponds to the foregoing second encoding method. The method includes the following steps.

**Step 1001:** Parse a bitstream to obtain position identification data corresponding to a position vector difference of a current block to be decoded in a target region and a first flag bit.

The position vector difference indicates a difference between a position vector of the current block and a reference position vector, the position vector of the current block indicates a position relationship between the current block and a reference block corresponding to the current block, the position identification data is a multiple of the position vector difference relative to a target alignment size or is the position vector difference, and the first flag bit indicates a category of the position identification data.

**Step 1002:** Determine the position vector difference of the current block based on the target alignment size, the position identification data, and the first flag bit.

Optionally, the position vector difference may be determined based on a value of the first flag bit by using the target alignment size and the position identification data.

In some embodiments, the target alignment size includes a horizontal alignment size and a vertical alignment size, the position vector difference includes a horizontal component and a vertical component, and the position identification data includes horizontal identification data and vertical identification data. In this case, if the value of the first flag bit is a first value, the horizontal alignment size is multiplied by the horizontal identification data to obtain the horizontal component, and the vertical alignment size is multiplied by the vertical identification data to obtain the vertical component. If the value of the first flag bit is a second value, the horizontal identification data is determined as the horizontal component, and the vertical identification data is determined as the vertical component.

When the value of the first flag bit is the first value, it indicates that the position identification data is the multiple of the position vector difference relative to the target alignment size. Therefore, the horizontal alignment size is multiplied by the horizontal identification data to obtain the horizontal component, and the vertical alignment size is multiplied by the vertical identification data to obtain the vertical component. When the value of the first flag bit is the second value, it indicates that the position identification data is the position vector difference. Therefore, the horizontal identification data may be directly determined as the horizontal component, and the vertical identification data may be directly determined as the vertical component.

In an example, both the horizontal alignment size and the vertical alignment size are 16, the horizontal identification data is 1, the vertical identification data is 4, and the value of the first flag bit is the first value 1. In this case, the horizontal component is the horizontal identification data multiplied by the horizontal alignment size, that is, 16. The vertical component is the vertical identification data multiplied by the vertical alignment size, that is, 64.

In another example, both the horizontal alignment size and the vertical alignment size are 16, the horizontal identification data is 17, the vertical identification data is 64, and the value of the first flag bit is the first value 0. In this case, the horizontal component is the horizontal identification data, that is, 17. The vertical component is the vertical identification data, that is, 64.

Based on the foregoing description, in an encoding process, if the horizontal component is not an integer multiple of the horizontal alignment size, and/or the vertical component is not an integer multiple of the vertical alignment size, a quotient and a remainder obtained by dividing the horizontal component by the horizontal alignment size are determined as the horizontal identification data, a quotient and a remainder obtained by dividing the vertical component by the vertical alignment size are determined as the vertical identification data, and the second value is determined as the value of the first flag bit. Correspondingly, in a decoding process, if the first flag bit is the second value, a quotient included in the horizontal identification data may be multiplied by the horizontal alignment size and then added to a remainder to obtain the horizontal component, and a quotient included in the vertical identification data may be multiplied by the vertical alignment size and then added to a remainder to obtain the vertical component.

**Step 1003**: Reconstruct the current block based on the position vector difference.

For an implementation of reconstructing the current block, refer to related content in the first encoding method. Details are not described herein again.

In an example, when the position vector difference is an MVD, a decoding syntax element corresponding to the decoding method is shown in Table 4.

Table 4

| mvd_decoding(x0,y0){ | Descriptor |
|---|---|
| **abs_mvd_greater0_flag[0]** | ae(v) |
| **abs_mvd_greater0_flag[1]** | ae(v) |
| if(abs_mvd_greater0_flag[0]) | |
| **abs_mvd_greater1_flag [0]** | ae(v) |
| if(abs_mvd_greater0_flag[1]) | |
| **abs_mvd_greater1_flag[1]** | ae(v) |
| if(abs_mvd_greater0_flag[0]‖abs_mvd_greater0_flag[1]) | |
| **mvd_ada_precision_flag** | ae(v) |
| if(abs_mvd_greater0_flag[0]){ | |
| if(abs_mvd_greater1_flag[0]) | |
| **abs_mvd_minus2[0]** | ae(v) |
| if(mvd_ada_precision_flag) | |
| abs_mvd_org[0]=(abs_mvd_minus2[0]+2)<<align_shift_x | |
| else | |
| abs_mvd_org[0]=abs_mvd_minus2[0]+2 | |
| **mvd_sign_flag[0]** | ae(v) |
| } | |
| if(abs_mvd_greater0_flag[1]){ | |
| if(abs_mvd_greater1_flag[1]) | |
| **abs_mvd_minus2[1]** | ae(v) |
| if(mvd_ada_precision_flag) | |
| abs_mvd_org[1]=(abs_mvd_minus2[1]+2)<<align_shift_y | |
| else | |
| abs_mvd_org[1]=abs_mvd_minus2[1]+2 | |
| **mvd_sign_flag[1]** | ae(v) |
| mvd_decoding(x0,y0){ | **Descriptor** |
| } | |
| } | |

Syntax in Table 4 is similar to the syntax in Table 1 to Table 3, and is not described herein again. For detailed content, refer to related content corresponding to Table 1 to Table 3.

After values of abs_mvd_greater0_flag[compIdx], abs_mvd_org[compIdx], and mvd_sign_flag[compIdx] are obtained, a value of the position vector difference may be calculated by using the foregoing expression (1).

Because encoding the multiple of the position vector difference relative to the target alignment size requires fewer bits than encoding the position vector difference of the current block, when the value of the first flag bit is the first value, efficiency of decoding the position identification data is higher than efficiency of decoding the position vector difference. In this way, efficiency of decoding an image including text content can be improved while decoding accuracy is ensured. In addition, in the encoding process, if the horizontal component is not the integer multiple of the horizontal alignment size, and/or the vertical component is not the integer multiple of the vertical alignment size, the quotient and the remainder obtained by dividing the horizontal component by the horizontal alignment size are determined as the horizontal identification data, the quotient and the remainder obtained by dividing the vertical component by the vertical alignment size are determined as the vertical identification data, and the second value is determined as the value of the first flag bit. Because a quantity of bits required for encoding the quotient and the remainder is less than a quantity of bits required for directly encoding the position vector difference, when the first flag bit is the second value, efficiency of decoding the position identification data is also higher than efficiency of decoding the position vector difference. In this way, efficiency of decoding the image including text content can be improved while decoding accuracy is ensured.

In addition, the decoding method provided in this embodiment of this application can be combined with a standard video decoding method without affecting a standard video decoding procedure. In other words, the decoding method provided in this embodiment of this application has relatively strong portability and can improve efficiency of decoding the image including text content without adding additional hardware costs.

An embodiment of this application further provides a third encoding method. The method includes the following steps.

**Step 1101:** Obtain a target region, where the target region is obtained by performing alignment processing on a target image based on a target alignment size.

For an implementation of obtaining the target region, refer to related content in the foregoing first encoding method. Details are not described herein again.

**Step 1102:** Determine a position vector difference of a current block to be encoded in the target region, where the position vector difference indicates a difference between a position vector of the current block and a reference position vector, and the position vector of the current block indicates a position relationship between the current block and a reference block corresponding to the current block.

For an implementation of determining the position vector difference of the current block to be encoded in the target region, refer to related content in the foregoing first encoding method. Details are not described herein again.

**Step 1103:** Determine, based on the target alignment size and the position vector difference of the current block, position identification data corresponding to the position vector difference and a first flag bit, where the position identification data is a multiple of the position vector difference relative to the target alignment size or is the position vector difference, and the first flag bit indicates a category of the position identification data.

In some embodiments, the target alignment size includes a horizontal alignment size, the position vector difference includes a horizontal component, the position identification data includes horizontal identification data, the first flag bit includes a horizontal flag bit, and the horizontal flag bit is further used in combination with the horizontal identification data to indicate the horizontal component. In this case, a quotient obtained by dividing the horizontal component by the horizontal alignment size is determined as the horizontal identification data, and a remainder obtained by dividing the horizontal component by the horizontal alignment size is determined as a value of the horizontal flag bit.

Because the quotient and the remainder obtained by dividing the horizontal component by the horizontal alignment size can accurately represent the horizontal component, the quotient obtained by dividing the horizontal component by the horizontal alignment size can be determined as the horizontal identification data, and the remainder obtained by dividing the horizontal component by the horizontal alignment size can be determined as the value of the horizontal flag bit. In this way, the horizontal component can be accurately encoded into a bitstream, and accuracy of encoding and decoding the horizontal component is ensured.

**In** some other embodiments, the target alignment size includes a vertical alignment size, the position vector difference includes a vertical component, the position identification data includes vertical identification data, the first flag bit includes a vertical flag bit, and the vertical flag bit is further used in combination with the vertical identification data to indicate the vertical component. In this case, a quotient obtained by dividing the vertical component by the vertical alignment size is determined as the vertical identification data, and a remainder obtained by dividing the vertical component by the vertical alignment size is determined as a value of the vertical flag bit.

Because the quotient and the remainder obtained by dividing the vertical component by the vertical alignment size can accurately represent the vertical component, the quotient obtained by dividing the vertical component by the vertical alignment size can be determined as the vertical identification data, and the remainder obtained by dividing the vertical component by the vertical alignment size can be determined as the value of the vertical flag bit. In this way, the vertical component can be accurately encoded into the bitstream, and accuracy of encoding and decoding the vertical component is ensured.

In an example, both the horizontal alignment size and the vertical alignment size are 16, the horizontal component is 16, and the vertical component is 64. For the horizontal component, $16 \div 16 = 1$. In other words, the quotient obtained by dividing the horizontal component by the horizontal alignment size is 1, and the remainder is 0. For the vertical component, $64 \div 16 = 4$. In other words, the quotient obtained by dividing the vertical component by the vertical alignment size is 4, and the remainder is 0.

In another example, a first value is 1, a second value is 0, both the horizontal alignment size and the vertical alignment size are 16, the horizontal component is 17, and the vertical component is 64. For the horizontal component, 17 ÷ 16 = 1...1. In other words, the quotient obtained by dividing the horizontal component by the horizontal alignment size is 1, and the remainder is 1. For the vertical component, 64 ÷ 16 = 4. In other words, the quotient obtained by dividing the vertical component by the vertical alignment size is 4, and the remainder is 0.

**Step 1104:** Encode the position identification data corresponding to the position vector difference and the first flag bit into the bitstream.

For an implementation of encoding the position identification data corresponding to the position vector difference and the first flag bit into the bitstream, refer to related content in the foregoing first encoding method. Details are not described herein again.

In an example, when the position vector difference is an MVD, an encoding syntax element corresponding to the third encoding method is shown in Table 5.

Table 5

| mvd_coding(x0,y0) { | **Descriptor** |
|---|---|
| **abs_mvd_greater0_flag[0]** | ae(v) |
| **abs_mvd_greater0_flag[1]** | ae(v) |
| if(abs_mvd_greater0_flag[0]) | |
| mvd_coding(x0,y0) { | **Descriptor** |
| **abs_mvd_greater1_flag[0]** | ae(v) |
| if(abs_mvd_greater0_flag[1]) | |
| **abs_mvd_greater1_flag[1]** | ae(v) |
| if(abs_mvd_greater0_flag[0]){ | |
| if(abs_mvd_greaterl_flag[0]) | |
| **abs_mvd_mul_minus2[0]** | ae(v) |
| **abs_mvd_rem[0]** | ae(v) |
| **mvd_sign_flag[0]** | ae(v) |
| } | |
| if(abs_mvd_greater0_flag[1]){ | |
| if(abs_mvd_greater1_flag[1]) | |
| **abs_mvd_mul_minus2[1]** | ae(v) |
| **abs_mvd_rem[1]** | ae(v) |
| **mvd_sign_flag[1]** | ae(v) |
| } | |
| } | |

In the foregoing Table 5, original syntax of abs_mvd_mul_minus2[0] and abs_mvd_mul_minus2[1] is abs_mvd_mul_minus2[compIdx]. abs_mvd_mul_minus2[compIdx] indicates a value obtained by subtracting 2 from an absolute value of a quotient included in the position identification data, that is, the value obtained by subtracting 2 from the absolute value of the quotient included in the position identification data is encoded into the bitstream. When the position identification data includes the horizontal identification data and the vertical identification data, compIdx may be 0 or 1. When compIdx is 0, it indicates the horizontal identification data; or when compIdx is 1, it indicates the vertical identification data. Therefore, abs_mvd_mul_minus2[0] indicates a value obtained by subtracting 2 from an absolute value of a quotient included in the horizontal identification data. abs_mvd_mul_minus2[1] indicates a value obtained by subtracting 2 from an absolute value of a quotient included in the vertical identification data.

Original syntax of abs_mvd_rem[0] and abs_mvd_rem [1] is abs_mvd_rem[compIdx]. abs_mvd_rem[compIdx] indicates a remainder included in the position identification data, and the remainder included in the position identification data is encoded into the bitstream. When the position identification data includes the horizontal identification data and the vertical identification data, compIdx may be 0 or 1. When compIdx is 0, it indicates the horizontal identification data; or when compIdx is 1, it indicates the vertical identification data. Therefore, abs_mvd_rem[0] indicates a remainder included in the horizontal identification data. abs_mvd_rem [1] indicates a remainder included in the vertical identification data.

Other syntax that is in Table 5 and that is similar to the syntax in Table 1 is not described herein again. For detailed content, refer to related content corresponding to Table 1.

For the target image including text content, after alignment processing is performed on the target image based on the target alignment size to obtain the target region, a quotient and a remainder obtained by dividing the position vector difference by the target alignment size are directly determined as the position identification data and the first flag bit respectively. The quotient and the remainder obtained by dividing the position vector difference by the target alignment size can accurately represent the position vector difference, and a quantity of bits required for encoding the quotient and the remainder is less than a quantity of bits required for directly encoding the position vector difference of the current block. Therefore, encoding the quotient and the remainder obtained by dividing the position vector difference by the target alignment size into the bitstream can effectively reduce the quantity of bits required for encoding the position vector difference while ensuring accuracy of encoding the position vector difference, thereby ensuring relatively high efficiency of encoding the image including text content.

In addition, the encoding method provided in this embodiment of this application can be combined with a standard video encoding method without affecting a standard video encoding procedure. In other words, the encoding method provided in this embodiment of this application has relatively strong portability and can improve efficiency of encoding the image including text content without adding additional hardware costs.

An embodiment of this application further provides a third decoding method. The decoding method corresponds to the foregoing third encoding method. The method includes the following steps.

**Step 1201:** Parse a bitstream to obtain position identification data corresponding to a position vector difference of a current block to be decoded in a target region and a first flag bit.

The position vector difference indicates a difference between a position vector of the current block and a reference position vector, the position vector of the current block indicates a position relationship between the current block and a reference block corresponding to the current block, the position identification data is a multiple of the position vector difference relative to a target alignment size or is the position vector difference, and the first flag bit indicates a category of the position identification data.

**Step 1202:** Determine the position vector difference based on the target alignment size, the position identification data corresponding to the position vector difference, and the first flag bit.

In some embodiments, the target alignment size includes a horizontal alignment size, the position vector difference includes a horizontal component, the position identification data includes horizontal identification data, the first flag bit includes a horizontal flag bit, and the horizontal flag bit is further used in combination with the horizontal identification data to indicate the horizontal component. In this case, a quotient included in the horizontal identification data is multiplied by the horizontal alignment size and then added to a value of the horizontal flag bit, to obtain the horizontal component.

In some other embodiments, the target alignment size includes a vertical alignment size, the position vector difference includes a vertical component, the position identification data includes vertical identification data, the first flag bit includes a vertical flag bit, and the vertical flag bit is further used in combination with the vertical identification data to indicate the vertical component. In this case, a quotient included in the vertical identification data is multiplied by the vertical alignment size and then added to a value of the vertical flag bit, to obtain the vertical component.

**Step 1203:** Reconstruct the current block based on the position vector difference.

For an implementation of reconstructing the current block, refer to related content in the first encoding method. Details are not described herein again.

In an example, when the position vector difference is an MVD, a decoding syntax element corresponding to the foregoing decoding method is shown in Table 6.

Table 6

| mvd_decoding(x0,y0){ | Descriptor |
| --- | --- |
| **abs_mvd_greater0_flag[0]** | ae(v) |
| **abs_mvd_greater0_flag[1]** | ae(v) |
| if(abs_mvd_greater0_flag[0]) | |
| **abs_mvd_greaterl_flag [0]** | ae(v) |
| if(abs_mvd_greater0_flag[1]) | |
| **abs_mvd_greater1_flag[1]** | ae(v) |
| if(abs_mvd_greater0_flag[0]){ | |

(continued)

| | |
|---|---|
| if(abs_mvd_greaterl_flag[0]) | |
| **abs_mvd_mul_minus2[0]** | ae(v) |
| **abs_mvd_rem[0]** | ae(v) |
| abs_mvd_org[0]=((abs_mvd_mul_minus2[0]+2)<<align_shift_x)+abs_my d_rem[0] | |
| mvd_decoding(x0,y0){ | **Descriptor** |
| **mvd_sign_flag[0]** | ae(v) |
| } | |
| if(abs_mvd_greater0_flag[1]){ | |
| if(abs_mvd_greater1_flag[1]) | |
| **abs_mvd_mul_minus2[1]** | ae(v) |
| **abs_mvd_rem[1]** | ae(v) |
| abs_mvd_org[1]=((abs_mvd_mul_minus2[1]+2)<<align_shift_y)+abs_mv d_rem[1] | |
| **mvd_sign_flag[1]** | ae(v) |
| } | |
| } | |

Syntax in Table 6 is similar to the syntax in Table 1, Table 2, and Table 5, and is not described herein again. For detailed content, refer to related content corresponding to Table 1, Table 2, and Table 5.

After values of abs_mvd_greater0_flag[compIdx], abs_mvd_org[compIdx], and mvd_sign_flag[compIdx] are obtained, a value of the position vector difference may be calculated by using the foregoing expression (1).

Because the position identification data corresponding to the position vector difference and the first flag bit are a quotient and a remainder obtained by dividing the position vector difference by the target alignment size, and a quantity of bits required for encoding the quotient and the remainder is less than a quantity of bits required for directly encoding the position vector difference of the current block, in a decoding process, efficiency of decoding the position identification data corresponding to the position vector difference and the first flag bit is higher than efficiency of decoding the position vector difference. In this way, efficiency of decoding an image including text content can be improved while decoding accuracy is ensured.

In addition, the decoding method provided in this embodiment of this application can be combined with a standard video decoding method without affecting a standard video decoding procedure. In other words, the decoding method provided in this embodiment of this application has relatively strong portability and can improve efficiency of decoding the image including text content without adding additional hardware costs.

An embodiment of this application further provides a fourth encoding method. The method includes the following steps.

**Step 1301:** Obtain a target region, where the target region is obtained by performing alignment processing on a target image based on a target alignment size.

For an implementation of obtaining the target region, refer to related content in the foregoing first encoding method. Details are not described herein again.

**Step 1302:** Determine a position vector difference of a current block to be encoded in the target region, where the position vector difference indicates a difference between a position vector of the current block and a reference position vector, and the position vector of the current block indicates a position relationship between the current block and a reference block corresponding to the current block.

In some embodiments, a first candidate position vector difference and a second candidate position vector difference of the current block are determined, where the first candidate position vector difference is determined based on first pixel precision, the second candidate position vector difference is determined based on second pixel precision, the first pixel precision is an integer, and the second pixel precision is a multiple of the target alignment size. A rate-distortion cost of the first candidate position vector difference and a rate-distortion cost of the second candidate position vector difference are determined; and a candidate position vector difference with a smaller rate-distortion cost in the first candidate position vector difference and the second candidate position vector difference is determined as the position vector difference of the current block.

In some embodiments, based on the current block to be encoded in the target region, a first position vector and a second position vector are respectively determined by using the first pixel precision and the second pixel precision and based on a related algorithm, where the first position vector is a relative displacement between the current block and a first reference block, the first reference block is a reference block determined based on the first pixel precision and corresponding to the current block, the second position vector is a relative displacement between the current block and a second reference block, and the second reference block is a reference block determined based on the second pixel precision and corresponding to the current block.

A first reference position vector corresponding to the first position vector is determined based on the first position vector and a related predictive coding algorithm, and a value obtained by subtracting the first reference position vector from the first position vector is determined as the first candidate position vector difference, where the first reference position vector is determined based on the first pixel precision. A second reference position vector corresponding to the second position vector is determined based on the second position vector and the related predictive coding algorithm, and a value obtained by subtracting the second reference position vector from the second position vector is determined as the second candidate position vector difference, where the second reference position vector is determined based on the second pixel precision.

The rate-distortion cost of the first candidate position vector difference is determined based on the first candidate position vector difference and the related algorithm. The rate-distortion cost of the second candidate position vector difference is determined based on the second candidate position vector difference and the related algorithm.

In some embodiments, the first position vector and the second position vector may be determined based on a motion search algorithm. Certainly, the first position vector and the second position vector may alternatively be determined based on another algorithm. This is not limited in this embodiment of this application.

Based on the foregoing description, an encoder finds, from an encoded reference image by using the motion search algorithm, the reference block corresponding to the current block. Because the encoded reference image includes a plurality of coding units (that is, a plurality of blocks), the encoder can determine, from the plurality of blocks based on specific pixel precision, the reference block corresponding to the current block. For example, the second pixel precision is 16, and coordinates of the current block are (50, 21). In this case, based on the coordinates of the current block, the second reference block is determined by using the motion search algorithm and by using the second pixel precision (that is, 16) as a step, and a relative displacement between the current block and the second reference block is determined as the second position vector. Because the second reference block is obtained through search based on the coordinates of the current block and by using the step of 16, the relative displacement between the current block and the second reference block is definitely a multiple of the second pixel precision. In other words, the second position vector is definitely a multiple of the second pixel precision. Similarly, the second reference position vector is also determined based on the second pixel precision, and the second reference position vector is also a multiple of the second pixel precision. Therefore, the second candidate position vector difference is also a multiple of the second pixel precision.

It should be noted that the second pixel precision may include horizontal pixel precision and vertical pixel precision. In this case, the horizontal pixel precision is a multiple of the target alignment size, and the vertical pixel precision is also a multiple of the target alignment size. The horizontal pixel precision and the vertical pixel precision may be the same or different. This is not limited in this embodiment of this application. If the second pixel precision includes the horizontal pixel precision and the vertical pixel precision, in a process of determining the second reference block corresponding to the current block, the second reference block is determined based on the coordinates of the current block by using the motion search algorithm, by using the horizontal pixel precision as a step in a horizontal direction, and by using the vertical pixel precision as a step in a vertical direction.

**Step 1303:** Determine, based on the target alignment size and the position vector difference of the current block, position identification data corresponding to the position vector difference and a first flag bit, where the position identification data is a multiple of the position vector difference relative to the target alignment size or is the position vector difference, and the first flag bit indicates a category of the position identification data.

In some embodiments, the position identification data and a value of the first flag bit may be determined based on the target alignment size and the position vector difference.

In some embodiments, the target alignment size includes a horizontal alignment size and a vertical alignment size, the position vector difference includes a horizontal component and a vertical component, and the position identification data includes horizontal identification data and vertical identification data. If the position vector difference of the current block is the second candidate position vector difference, a multiple of the horizontal component relative to the horizontal alignment size is determined as the horizontal identification data, a multiple of the vertical component relative to the vertical alignment size is determined as the vertical identification data, and a first value is determined as the value of the first flag bit.

If the position vector difference of the current block is the first candidate position vector difference, the horizontal component is determined as the horizontal identification data, the vertical component is determined as the vertical identification data, and a second value is determined as the value of the first flag bit.

Based on the foregoing description, the second candidate position vector difference is a multiple of the second pixel precision, and the second pixel precision is a multiple of the target alignment size. On this basis, the second candidate position vector difference is definitely a multiple of the target alignment size. The multiple of the horizontal component relative to the horizontal alignment size can accurately represent the horizontal component, and the multiple of the vertical component relative to the vertical alignment size can also accurately represent the vertical component. Therefore, when the position vector difference of the current block is the second candidate position vector difference, the multiple of the horizontal component relative to the horizontal alignment size may be directly determined as the horizontal identification data, and the multiple of the vertical component relative to the vertical alignment size may be determined as the vertical identification data. In this way, the horizontal component and the vertical component can be accurately encoded into a bitstream, thereby ensuring accuracy of encoding and decoding the horizontal component and the vertical component.

When the position vector difference of the current block is the first candidate position vector difference, it cannot be determined that the second candidate position vector difference is definitely a multiple of the target alignment size. Therefore, the horizontal component is determined as the horizontal identification data, the vertical component is determined as the vertical identification data, and the second value is determined as the value of the first flag bit, to avoid a horizontal component encoding error caused by encoding the multiple of the horizontal component relative to the horizontal alignment size into the bitstream, and a vertical component encoding error caused by encoding the multiple of the vertical component relative to the vertical alignment size into the bitstream, thereby ensuring accuracy of encoding and decoding the horizontal component and the vertical component.

The first value and the second value are preset, and the first value is different from the second value. For example, the first value may be 1, and the second value may be 0. In addition, in different cases, adjustments may be further performed based on different requirements.

It should be noted that, if the position vector difference of the current block is the first candidate position vector difference, in addition to directly determining the horizontal component as the horizontal identification data and determining the vertical component as the vertical identification data, a quotient and a remainder obtained by dividing the horizontal component by the horizontal alignment size may also be determined as the horizontal identification data. A quotient and a remainder obtained by dividing the vertical component by the vertical alignment size are determined as the vertical identification data, and the second value is determined as the value of the first flag bit. In this case, the first flag bit is used to distinguish between two different manners of determining the position identification data.

The position vector difference can be accurately represented by a quotient and a remainder that are obtained by dividing the position vector difference by the target alignment size, and a quantity of bits required for encoding the quotient and the remainder is less than a quantity of bits required for directly encoding the position vector difference. Therefore, even if it cannot be determined whether the position vector difference is an integer multiple of the target alignment size, accurate encoding of the position vector can be implemented by using a relatively small quantity of bits, thereby improving efficiency of encoding the image including text content while ensuring accuracy of encoding the position vector difference. Certainly, when the position vector difference of the current block is the first candidate position vector difference, the position identification data and the first flag bit may alternatively be determined in another manner. This is not limited in this embodiment of this application.

**Step 1304:** Encode the position identification data corresponding to the position vector difference and the first flag bit into the bitstream.

For an implementation of encoding the position identification data corresponding to the position vector difference and the first flag bit into the bitstream, refer to related content in the foregoing first encoding method.

In an example, when the position vector difference is an MVD, during encoding, ammvd_flag may indicate whether the first flag bit is equal to 1. ammvd_flag may be 1 or 0. If the first flag bit is equal to 1, ammvd_flag is 1, and 1 is encoded into the bitstream; otherwise, ammvd_flag is 0, and 0 is encoded into the bitstream.

For the target image including text content, after alignment processing is performed on the target image based on the target alignment size to obtain the target region, when the position vector difference of the current block is the second candidate position vector difference, the multiple of the position vector difference relative to the target alignment size is used as the position identification data and encoded into the bitstream. The position vector difference of the current block is also a multiple of the target alignment size, the multiple of the position vector difference relative to the target alignment size can accurately represent the position vector difference, and a quantity of bits required for encoding the multiple of the position vector difference relative to the target alignment size is less than the quantity of bits required for directly encoding the position vector difference of the current block. Therefore, encoding the multiple of the position vector difference relative to the target alignment size into the bitstream can effectively reduce the quantity of bits required for encoding the position vector difference while ensuring accuracy of encoding the position vector difference, thereby ensuring relatively high efficiency of encoding the image including text content.

In this embodiment of this application, if the position vector difference of the current block is the first candidate position vector difference, the quotient and the remainder obtained by dividing the horizontal component by the horizontal alignment size may also be determined as the horizontal identification data, the quotient and the remainder obtained by dividing the vertical component by the vertical alignment size may be determined as the vertical identification data, and the second value may be determined as the value of the first flag bit. The position vector difference can be accurately represented by the quotient and the remainder that are obtained by dividing the position vector difference by the target alignment size, and the quantity of bits required for encoding the quotient and the remainder is less than the quantity of bits required for directly encoding the position vector difference. Therefore, even if it cannot be determined whether the position vector difference is an integer multiple of the target alignment size, accurate encoding of the position vector can be implemented by using a relatively small quantity of bits, thereby improving efficiency of encoding the image including text content while ensuring accuracy of encoding the position vector difference.

In addition, the encoding method provided in this embodiment of this application can be combined with a standard video encoding method without affecting a standard video encoding procedure. In other words, the encoding method provided in this embodiment of this application has relatively strong portability and can improve efficiency of encoding the image including text content without adding additional hardware costs.

An embodiment of this application further provides a fourth decoding method. The decoding method corresponds to the foregoing fourth encoding method. The method includes the following steps.

**Step 1401:** Parse a bitstream to obtain position identification data corresponding to a position vector difference of a current block to be decoded in a target region and a first flag bit.

The position vector difference indicates a difference between a position vector of the current block and a reference position vector, the position vector of the current block indicates a position relationship between the current block and a reference block corresponding to the current block, the position identification data is a multiple of the position vector difference relative to a target alignment size or is the position vector difference, and the first flag bit indicates a category of the position identification data.

**Step 1402:** Determine the position vector difference based on the target alignment size, the position identification data corresponding to the position vector difference, and the first flag bit.

In some embodiments, the position vector difference may be determined based on a value of the first flag bit by using the target alignment size and the position identification data.

In some embodiments, the target alignment size includes a horizontal alignment size and a vertical alignment size, the position vector difference includes a horizontal component and a vertical component, and the position identification data includes horizontal identification data and vertical identification data. In this case, if the value of the first flag bit is a first value, the horizontal alignment size is multiplied by the horizontal identification data to obtain the horizontal component, and the vertical alignment size is multiplied by the vertical identification data to obtain the vertical component. If the value of the first flag bit is a second value, the horizontal identification data is determined as the horizontal component, and the vertical identification data is determined as the vertical component.

If the value of the first flag bit is the first value, it indicates that the position vector difference of the current block is a multiple of the target alignment size. Therefore, the horizontal alignment size is multiplied by the horizontal identification data to obtain the horizontal component, and the vertical alignment size is multiplied by the vertical identification data to obtain the vertical component. If the value of the first flag bit is the second value, it indicates that the position vector difference of the current block is not necessarily a multiple of the target alignment size. Therefore, the horizontal identification data may be determined as the horizontal component, and the vertical identification data may be determined as the vertical component.

Based on the foregoing description, in an encoding process, if the position vector difference of the current block is a first candidate position vector difference, a quotient and a remainder obtained by dividing the horizontal component by the horizontal alignment size are determined as the horizontal identification data, a quotient and a remainder obtained by dividing the vertical component by the vertical alignment size are determined as the vertical identification data, and the second value is determined as the value of the first flag bit. Correspondingly, in a decoding process, if the first flag bit is the second value, a quotient included in the horizontal identification data may be multiplied by the horizontal alignment size and then added to a remainder to obtain the horizontal component, and a quotient included in the vertical identification data may be multiplied by the vertical alignment size and then added to a remainder to obtain the vertical component.

**Step 1403:** Reconstruct the current block based on the position vector difference.

For an implementation of reconstructing the current block, refer to related content in the first encoding method. Details are not described herein again.

In an example, when the position vector difference is an MVD, after the position identification data and the first flag bit are obtained through decoding, a quantity of shift bits corresponding to the target alignment size may be determined based on the first flag bit, and a value obtained by left-shifting a binary number of the position identification data by the quantity of shift bits corresponding to the target alignment size is determined as the position vector difference. In other words, the binary number of the position identification data is left-shifted, so that the position identification data is multiplied by the target alignment size to obtain the position vector difference, or the position identification data is directly used as the position vector difference.

If the first flag bit is the first value, the quantity of shift bits corresponding to the target alignment size is the quantity of shift bits corresponding to the target alignment size in second pixel precision. If the first flag bit is the second value, the quantity of shift bits corresponding to the target alignment size is the quantity of shift bits corresponding to the target alignment size in first pixel precision.

If the position vector difference includes the horizontal component and the vertical component, and the position identification data includes the horizontal identification data and the vertical identification data, and the target alignment size includes the horizontal alignment size and the vertical alignment size, a value obtained by left-shifting binary horizontal identification data by a quantity of shift bits corresponding to the horizontal alignment size is determined as the horizontal component, and a value obtained by left-shifting binary vertical identification data by a quantity of shift bits corresponding to the vertical alignment size is determined as the vertical component.

In an example, if ammvd_flag obtained by parsing the bitstream is 1, it is determined that the first flag bit is equal to 1, that is, the first flag is the first value. If ammvd_flag obtained by parsing the bitstream is 0, it is determined that the first flag bit is not equal to 1, that is, the first flag is the second value.

For example, AmmvdShift[compIdx] may indicate the quantity of shift bits corresponding to the target alignment size in the first pixel precision and the second pixel precision. The quantity of shift bits corresponding to the target alignment size in the first pixel precision is 0, and the quantity of shift bits corresponding to the target alignment size in the second pixel precision is related to a quantity of binary bits of the target alignment size. When the target alignment size includes the horizontal alignment size and the vertical alignment size, compIdx may be 0 or 1. When compIdx is 0, it indicates the horizontal alignment size; or when compIdx is 1, it indicates the vertical alignment size.

Optionally, the quantity of shift bits corresponding to the target alignment size in the second pixel precision is equal to the quantity of binary bits of the target alignment size minus 1. For example, if the target alignment size is 8, the quantity of shift bits corresponding to the target alignment size in the second pixel precision is 3. If the target alignment size is 16, the quantity of shift bits corresponding to the target alignment size in the second pixel precision is 4. If the target alignment size is 32, the quantity of shift bits corresponding to the target alignment size in the second pixel precision is 5. If the target alignment size is 64, the quantity of shift bits corresponding to the target alignment size in the second pixel precision is 6. Certainly, the quantity of shift bits corresponding to the target alignment size may alternatively be determined in another manner. This is not limited in this embodiment of this application.

In actual application, the encoding method and the decoding method provided in this application need to allow use of an adaptive multiple integer pixel precision MVD predictive coding (adaptive multiple integer pixel precision MVD, AMMVD) technology. In this case, sps_ammvd_enabled_flag may be used to identify whether an encoding and decoding network allows use of the AMMVD technology. 1 indicates that use of the AMMVD technology is allowed, and 0 indicates that use of the AMMVD technology is not allowed. When use of the AMMVD technology is allowed, the fourth encoding method and the fourth decoding method may be used for encoding and decoding.

Because encoding the multiple of the position vector difference relative to the target alignment size requires fewer bits than encoding the position vector difference of the current block, when the value of the first flag bit is the first value, efficiency of decoding the position identification data is higher than efficiency of decoding the position vector difference. In this way, efficiency of decoding an image including text content can be improved while decoding accuracy is ensured. In addition, in the encoding process, when the position vector difference of the current block is the first candidate position vector difference, the quotient and the remainder obtained by dividing the horizontal component by the horizontal alignment size are determined as the horizontal identification data. The quotient and the remainder obtained by dividing the vertical component by the vertical alignment size are determined as the vertical identification data, and the second value is determined as the value of the first flag bit. Because a quantity of bits required for encoding the quotient and the remainder is less than a quantity of bits required for directly encoding the position vector difference, when the first flag bit is the second value, efficiency of decoding the position identification data is also higher than efficiency of decoding the position vector difference. In this way, efficiency of decoding the image including text content can be improved while decoding accuracy is ensured.

In addition, the decoding method provided in this embodiment of this application can be combined with a standard video decoding method without affecting a standard video decoding procedure. In other words, the decoding method provided in this embodiment of this application has relatively strong portability and can improve efficiency of decoding the image including text content without adding additional hardware costs.

FIG. 9 is a diagram of a structure of an encoding apparatus according to an embodiment of this application. The encoding apparatus may be implemented by software, hardware, or a combination thereof to constitute a part or all of an encoder side. In addition, the encoding apparatus may be the encoder 100 in FIG. 1. With reference to FIG. 9, the apparatus includes an obtaining module 901, a first determining module 902, a second determining module 903, and a first encoding module 904.

The obtaining module 901 is configured to obtain a target region, where the target region is obtained by performing alignment processing on a target image based on a target alignment size. For a detailed implementation process, refer to corresponding content in the foregoing embodiments. Details are not described herein again.

The first determining module 902 is configured to determine a position vector difference of a current block to be encoded in the target region, where the position vector difference indicates a difference between a position vector of the current block and a reference position vector, and the position vector of the current block indicates a position relationship between the current block and a reference block corresponding to the current block. For a detailed implementation process, refer to corresponding content in the foregoing embodiments. Details are not described herein again.

The second determining module 903 is configured to determine, based on the target alignment size and the position vector difference, position identification data corresponding to the position vector difference and a first flag bit, where the position identification data is a multiple of the position vector difference relative to the target alignment size or is the position vector difference, and the first flag bit indicates a category of the position identification data. For a detailed implementation process, refer to corresponding content in the foregoing embodiments. Details are not described herein again.

The first encoding module 904 is configured to encode the position identification data and the first flag bit into a bitstream. For a detailed implementation process, refer to corresponding content in the foregoing embodiments. Details are not described herein again.

Optionally, the target alignment size includes a horizontal alignment size, the position vector difference includes a horizontal component, the position identification data includes horizontal identification data, the first flag bit includes a horizontal flag bit, and the horizontal flag bit indicates a category of the horizontal identification data; and

the second determining module 903 is specifically configured to:

if the horizontal component is an integer multiple of the horizontal alignment size, determine a multiple of the horizontal component relative to the horizontal alignment size as the horizontal identification data, and determine a first value as a value of the horizontal flag bit.

Optionally, the second determining module 903 is specifically configured to:

if the horizontal component is not an integer multiple of the horizontal alignment size, determine the horizontal component as the horizontal identification data, and determine a second value as the value of the horizontal flag bit.

Optionally, the target alignment size includes a vertical alignment size, the position vector difference includes a vertical component, the position identification data includes vertical identification data, the first flag bit includes a vertical flag bit, and the vertical flag bit indicates a category of the vertical identification data; and

the second determining module 903 is specifically configured to:

if the vertical component is an integer multiple of the vertical alignment size, determine a multiple of the vertical component relative to the vertical alignment size as the vertical identification data, and determine a first value as a value of the vertical flag bit.

Optionally, the second determining module 903 is specifically configured to:

if the vertical component is not an integer multiple of the vertical alignment size, determine the vertical component as the vertical identification data, and determine a second value as the value of the vertical flag bit.

Optionally, the target alignment size includes a horizontal alignment size and a vertical alignment size, the position vector difference includes a horizontal component and a vertical component, and the position identification data includes horizontal identification data and vertical identification data; and

the second determining module 903 is specifically configured to:

determine a multiple of the horizontal component relative to the horizontal alignment size as the horizontal identification data, determine a multiple of the vertical component relative to the vertical alignment size as the vertical identification data, and determine a first value as a value of the first flag bit.

Optionally, the first determining module 902 is specifically configured to:

determine a first candidate position vector difference and a second candidate position vector difference of the current block, where the first candidate position vector difference is determined based on first pixel precision, the second candidate position vector difference is determined based on second pixel precision, the first pixel precision is an integer, and the second pixel precision is a multiple of the target alignment size;

determine a rate-distortion cost of the first candidate position vector difference and a rate-distortion cost of the second candidate position vector difference; and

determine a candidate position vector difference with a smaller rate-distortion cost in the first candidate position vector difference and the second candidate position vector difference as the position vector difference of the current block.

Optionally, the second determining module 903 is specifically configured to:

if the horizontal component is an integer multiple of the horizontal alignment size, and the vertical component is an integer multiple of the vertical alignment size, determine a multiple of the horizontal component relative to the horizontal alignment size as the horizontal identification data, determine a multiple of the vertical component relative to the vertical alignment size as the vertical identification data, and determine the first value as the value of the first flag bit.

Optionally, the second determining module 903 is specifically configured to:

if the horizontal component is not an integer multiple of the horizontal alignment size, and/or the vertical component is not an integer multiple of the vertical alignment size, determine the horizontal component as the horizontal identification data, determine the vertical component as the vertical identification data, and determine a second value as the value of the first flag bit.

Optionally, the target alignment size includes a horizontal alignment size, the position vector difference includes a horizontal component, the position identification data includes horizontal identification data, the first flag bit includes a horizontal flag bit, and the horizontal flag bit is further used in combination with the horizontal identification data to indicate the horizontal component; and

the second determining module 903 is specifically configured to:

determine a quotient obtained by dividing the horizontal component by the horizontal alignment size as the horizontal identification data, and determine a remainder obtained by dividing the horizontal component by the horizontal alignment size as a value of the horizontal flag bit.

Optionally, the target alignment size includes a vertical alignment size, the position vector difference includes a vertical component, the position identification data includes vertical identification data, the first flag bit includes a vertical flag bit, and the vertical flag bit is further used in combination with the vertical identification data to indicate the vertical component; and

the second determining module 903 is specifically configured to:

determine a quotient obtained by dividing the vertical component by the vertical alignment size as the vertical identification data, and determine a remainder obtained by dividing the vertical component by the vertical alignment size as a value of the vertical flag bit.

Optionally, the target region is obtained by performing alignment processing on a text region in the target image based on the target alignment size, and the text region includes at least one character.

Optionally, the apparatus further includes:

a second encoding module, configured to encode residual information of the current block into the bitstream, where the residual information indicates a prediction residual between the current block and the reference block.

For the target image including text content, after alignment processing is performed on the target image based on the target alignment size to obtain the target region, the position identification data corresponding to the position vector difference of the current block to be encoded in the target region and the first flag bit can be determined based on the target alignment size. The position identification data may be the multiple of the position vector difference relative to the target alignment size. In this case, encoding the position identification data corresponding to the position vector difference and the first flag bit requires fewer bits than encoding the position vector difference. In other words, a bit cost for encoding the position identification data corresponding to the position vector difference and the first flag bit is usually less than a bit cost for directly encoding the position vector difference. Therefore, encoding the position identification data corresponding to the position vector difference and the first flag bit into the bitstream can effectively reduce a quantity of bits required for encoding the position vector difference while ensuring encoding accuracy, thereby ensuring relatively high efficiency of encoding the image including text content.

It should be noted that, during encoding by the encoding apparatus provided in the foregoing embodiment, division of the foregoing functional modules is merely used as an example for description. In actual application, the foregoing functions may be allocated to different functional modules and implemented based on a requirement. To be specific, an internal structure of the apparatus is divided into different functional modules to implement all or some of the functions described above. In addition, the encoding apparatus provided in the foregoing embodiment and the encoding method embodiment belong to a same concept. For details about a specific implementation process of the encoding apparatus, refer to the method embodiment. Details are not described herein again.

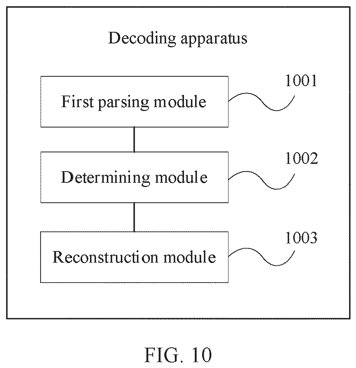

FIG. 10 is a diagram of a structure of a decoding apparatus according to an embodiment of this application. The decoding apparatus may be implemented by software, hardware, or a combination thereof to constitute a part or all of a decoder side. In addition, the decoding apparatus may be the decoder 200 in FIG. 1. With reference to FIG. 10, the apparatus includes a first parsing module 1001, a determining module 1002, and a reconstruction module 1003.

The first parsing module 1001 is configured to parse a bitstream to obtain position identification data corresponding to a position vector difference of a current block to be decoded in a target region and a first flag bit, where the position vector difference indicates a difference between a position vector of the current block and a reference position vector, the position vector of the current block indicates a position relationship between the current block and a reference block corresponding to the current block, the position identification data is a multiple of the position vector difference relative to a target alignment size or is the position vector difference, and the first flag bit indicates a category of the position identification data. For a detailed implementation process, refer to corresponding content in the foregoing embodiments. Details are not described herein again.

The determining module 1002 is configured to determine the position vector difference based on the target alignment size, the position identification data, and the first flag bit. For a detailed implementation process, refer to corresponding content in the foregoing embodiments. Details are not described herein again.

The reconstruction module 1003 is configured to reconstruct the current block based on the position vector difference. For a detailed implementation process, refer to corresponding content in the foregoing embodiments. Details are not described herein again.

Optionally, the target alignment size includes a horizontal alignment size, the position vector difference includes a horizontal component, the position identification data includes horizontal identification data, the first flag bit includes a horizontal flag bit, and the horizontal flag bit indicates a category of the horizontal identification data; and

the determining module 1002 is specifically configured to:

if a value of the horizontal flag bit is a first value, multiply the horizontal alignment size by the horizontal identification data to obtain the horizontal component.

Optionally, the determining module 1002 is specifically configured to:

if the value of the horizontal flag bit is a second value, determine the horizontal identification data as the horizontal component.

Optionally, the target alignment size includes a vertical alignment size, the position vector difference includes a vertical component, the position identification data includes vertical identification data, the first flag bit includes a vertical flag bit, and the vertical flag bit indicates a category of the vertical identification data; and

the determining module 1002 is specifically configured to:

if a value of the vertical flag bit is a first value, multiply the vertical alignment size by the vertical identification data to obtain the vertical component.

Optionally, the determining module 1002 is specifically configured to:

if the value of the vertical flag bit is a second value, determine the vertical identification data as the vertical component.

Optionally, the target alignment size includes a horizontal alignment size and a vertical alignment size, the position vector difference includes a horizontal component and a vertical component, and the position identification data includes horizontal identification data and vertical identification data; and

the determining module 1002 is specifically configured to:

if a value of the first flag bit is a first value, multiply the horizontal alignment size by the horizontal identification data to obtain the horizontal component, and multiply the vertical alignment size by the vertical identification data to obtain the vertical component.

Optionally, the determining module 1002 is specifically configured to:

If the value of the first flag bit is a second value, determine the horizontal identification data as the horizontal component, and determine the vertical identification data as the vertical component.

Optionally, the target alignment size includes a horizontal alignment size, the position vector difference includes a horizontal component, the position identification data includes horizontal identification data, the first flag bit includes a horizontal flag bit, and the horizontal flag bit is further used in combination with the horizontal identification data to indicate the horizontal component; and

the determining module 1002 is specifically configured to:

multiply the horizontal identification data by the horizontal alignment size and then add a value of the horizontal flag bit to obtain the horizontal component.

Optionally, the target alignment size includes a vertical alignment size, the position vector difference includes a vertical component, the position identification data includes vertical identification data, the first flag bit includes a vertical flag bit, and the vertical flag bit is further used in combination with the vertical identification data to indicate the vertical component; and

the determining module 1002 is specifically configured to:

multiply the vertical identification data by the vertical alignment size and then add a value of the vertical flag bit to obtain the vertical component.

Optionally, the apparatus further includes:

a second parsing module, configured to parse the bitstream to obtain residual information of the current block, where the residual information indicates a prediction residual between the current block and the reference block; and

the reconstruction module 1003 is specifically configured to:

reconstruct the current block based on the position vector difference and the residual information.

Because the position identification data may be the multiple of the position vector difference relative to the target alignment size, and encoding the position identification data corresponding to the position vector difference and the first flag bit requires fewer bits than encoding the position vector difference, when the position identification data is the multiple of the position vector difference relative to the target alignment size, efficiency of decoding the position identification data is higher than efficiency of decoding the position vector difference. In this way, efficiency of decoding an image including text content is improved while decoding accuracy is ensured. In addition, the decoding method provided in this embodiment of this application can be combined with a standard video decoding method without affecting a standard video decoding procedure. In other words, the decoding method provided in this embodiment of this application has relatively strong portability and can improve efficiency of decoding the image including text content without adding additional hardware costs.

It should be noted that, during decoding by the decoding apparatus provided in the foregoing embodiment, division of the foregoing functional modules is merely used as an example for description. In actual application, the foregoing functions may be allocated to different functional modules and implemented based on a requirement. To be specific, an internal structure of the apparatus is divided into different functional modules to implement all or some of the functions described above. In addition, the decoding apparatus provided in the foregoing embodiment and the decoding method embodiment belong to a same concept. For details about a specific implementation process of the decoding apparatus, refer to the method embodiment. Details are not described herein again.

An embodiment of this application further provides a computer-readable storage medium. The storage medium stores instructions. When the instructions are run on a computer, the computer is enabled to perform the steps of the encoding method in the foregoing embodiments, or perform the steps of the decoding method in the foregoing embodiments.

An embodiment of this application further provides a computer program product including instructions. When the instructions are run on a computer, the computer is enabled to perform the steps of the encoding method in the foregoing embodiments or the steps of the decoding method in the foregoing embodiments. In other words, a computer program is provided. When the computer program is run on the computer, the computer is enabled to perform the steps of the encoding method in the foregoing embodiments, or perform the steps of the decoding method in the foregoing embodiments.

An embodiment of this application further provides an encoding and decoding system. The encoding and decoding system includes an encoding device and a decoding device. The encoding device is configured to implement the steps of the encoding method in the foregoing embodiments. The decoding device is configured to implement the steps of the decoding method in the foregoing embodiments.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like. It should be noted that the computer-readable storage medium mentioned in embodiments of this application may be a non-volatile storage medium, that is, may be a non-transitory storage medium.

It should be understood that "a plurality of" in this specification means two or more. In descriptions of embodiments of this application, unless otherwise specified, "/" means "or". For example, A/B may indicate A or B. In this specification, "and/or" describes only an association relationship between associated objects and indicates that three relationships may exist. For example A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions. For example, the target region in embodiments of this application is obtained under full authorization.

The foregoing descriptions are merely embodiments of this application, but are not intended to limit this application. Any modification, equivalent replacement, or improvement made without departing from the spirit and principle of this application should fall within the protection scope of this application.

**Claims**

1. An encoding method, wherein the method comprises:

    obtaining a target region, wherein the target region is obtained by performing alignment processing on a target image based on a target alignment size;

    determining a position vector difference of a current block to be encoded in the target region, wherein the position vector difference indicates a difference between a position vector of the current block and a reference position vector, and the position vector of the current block indicates a position relationship between the current block and a reference block corresponding to the current block;

    determining, based on the target alignment size and the position vector difference, position identification data corresponding to the position vector difference and a first flag bit, wherein the position identification data is a multiple of the position vector difference relative to the target alignment size or is the position vector difference, and the first flag bit indicates a category of the position identification data; and

    encoding the position identification data and the first flag bit into a bitstream.

2. The method according to claim 1, wherein the target alignment size comprises a horizontal alignment size, the position vector difference comprises a horizontal component, the position identification data comprises horizontal identification data, the first flag bit comprises a horizontal flag bit, and the horizontal flag bit indicates a category of the horizontal identification data; and

    determining, based on the target alignment size and the position vector difference, the position identification data corresponding to the position vector difference and the first flag bit comprises:

    if the horizontal component is an integer multiple of the horizontal alignment size, determining a multiple of the horizontal component relative to the horizontal alignment size as the horizontal identification data, and determining a first value as a value of the horizontal flag bit.

3. The method according to claim 2, wherein the method further comprises:
    if the horizontal component is not an integer multiple of the horizontal alignment size, determining the horizontal component as the horizontal identification data, and determining a second value as the value of the horizontal flag bit.

4. The method according to any one of claims 1 to 3, wherein the target alignment size comprises a vertical alignment size, the position vector difference comprises a vertical component, the position identification data comprises vertical identification data, the first flag bit comprises a vertical flag bit, and the vertical flag bit indicates a category of the vertical identification data; and

    determining, based on the target alignment size and the position vector difference, the position identification data corresponding to the position vector difference and the first flag bit comprises:

    if the vertical component is an integer multiple of the vertical alignment size, determining a multiple of the vertical component relative to the vertical alignment size as the vertical identification data, and determining a first value as a value of the vertical flag bit.

5. The method according to claim 4, wherein the method further comprises:
    if the vertical component is not an integer multiple of the vertical alignment size, determining the vertical component as the vertical identification data, and determining a second value as the value of the vertical flag bit.

6. The method according to claim 1, wherein the target alignment size comprises a horizontal alignment size and a vertical alignment size, the position vector difference comprises a horizontal component and a vertical component, and the position identification data comprises horizontal identification data and vertical identification data; and

    determining, based on the target alignment size and the position vector difference, the position identification data corresponding to the position vector difference and the first flag bit comprises:

    determining a multiple of the horizontal component relative to the horizontal alignment size as the horizontal identification data, determining a multiple of the vertical component relative to the vertical alignment size as the vertical identification data, and determining a first value as a value of the first flag bit.

7. The method according to claim 6, wherein determining the position vector difference of the current block to be encoded in the target region comprises:

    determining a first candidate position vector difference and a second candidate position vector difference of the current block, wherein the first candidate position vector difference is determined based on first pixel precision, the second candidate position vector difference is determined based on second pixel precision, the first pixel precision is an integer, and the second pixel precision is a multiple of the target alignment size;

determining a rate-distortion cost of the first candidate position vector difference and a rate-distortion cost of the second candidate position vector difference; and

determining a candidate position vector difference with a smaller rate-distortion cost in the first candidate position vector difference and the second candidate position vector difference as the position vector difference of the current block.

8. The method according to claim 6, wherein determining the multiple of the horizontal component relative to the horizontal alignment size as the horizontal identification data, determining the multiple of the vertical component relative to the vertical alignment size as the vertical identification data, and determining the first value as the value of the first flag bit comprise:

if the horizontal component is an integer multiple of the horizontal alignment size, and the vertical component is an integer multiple of the vertical alignment size, determining a multiple of the horizontal component relative to the horizontal alignment size as the horizontal identification data, determining a multiple of the vertical component relative to the vertical alignment size as the vertical identification data, and determining the first value as the value of the first flag bit.

9. The method according to claim 8, wherein the method further comprises:

if the horizontal component is not an integer multiple of the horizontal alignment size, and/or the vertical component is not an integer multiple of the vertical alignment size, determining the horizontal component as the horizontal identification data, determining the vertical component as the vertical identification data, and determining a second value as the value of the first flag bit.

10. The method according to claim 1, wherein the target alignment size comprises a horizontal alignment size, the position vector difference comprises a horizontal component, the position identification data comprises horizontal identification data, the first flag bit comprises a horizontal flag bit, and the horizontal flag bit is further used in combination with the horizontal identification data to indicate the horizontal component; and

determining, based on the target alignment size and the position vector difference, the position identification data corresponding to the position vector difference and the first flag bit comprises:

determining a quotient obtained by dividing the horizontal component by the horizontal alignment size as the horizontal identification data, and determining a remainder obtained by dividing the horizontal component by the horizontal alignment size as a value of the horizontal flag bit.

11. The method according to claim 1 or 10, wherein the target alignment size comprises a vertical alignment size, the position vector difference comprises a vertical component, the position identification data comprises vertical identification data, the first flag bit comprises a vertical flag bit, and the vertical flag bit is further used in combination with the vertical identification data to indicate the vertical component; and

determining, based on the target alignment size and the position vector difference, the position identification data corresponding to the position vector difference and the first flag bit comprises:

determining a quotient obtained by dividing the vertical component by the vertical alignment size as the vertical identification data, and determining a remainder obtained by dividing the vertical component by the vertical alignment size as a value of the vertical flag bit.

12. The method according to any one of claims 1 to 11, wherein the target region is obtained by performing alignment processing on a text region in the target image based on the target alignment size, and the text region comprises at least one character.

13. The method according to any one of claims 1 to 12, wherein the method further comprises:

encoding residual information of the current block into the bitstream, wherein the residual information indicates a prediction residual between the current block and the reference block.

14. A decoding method, wherein the method comprises:

parsing a bitstream to obtain position identification data corresponding to a position vector difference of a current block to be decoded in a target region and a first flag bit, wherein

the position vector difference indicates a difference between a position vector of the current block and a reference position vector, the position vector of the current block indicates a position relationship between the current block and a reference block corresponding to the current block, the position identification data is a multiple of the position vector difference relative to a target alignment size or is the position vector difference, and the first flag bit indicates a category of the position identification data;

determining the position vector difference based on the target alignment size, the position identification data, and the first flag bit; and

reconstructing the current block based on the position vector difference.

15. The method according to claim 14, wherein the target alignment size comprises a horizontal alignment size, the position vector difference comprises a horizontal component, the position identification data comprises horizontal identification data, the first flag bit comprises a horizontal flag bit, and the horizontal flag bit indicates a category of the horizontal identification data; and

determining the position vector difference based on the target alignment size, the position identification data, and the first flag bit comprises:

if a value of the horizontal flag bit is a first value, multiplying the horizontal alignment size by the horizontal identification data to obtain the horizontal component.

16. The method according to claim 15, wherein the method further comprises:

if the value of the horizontal flag bit is a second value, determining the horizontal identification data as the horizontal component.

17. The method according to any one of claims 14 to 16, wherein the target alignment size comprises a vertical alignment size, the position vector difference comprises a vertical component, the position identification data comprises vertical identification data, the first flag bit comprises a vertical flag bit, and the vertical flag bit indicates a category of the vertical identification data; and

determining the position vector difference based on the target alignment size, the position identification data, and the first flag bit comprises:

if a value of the vertical flag bit is a first value, multiplying the vertical alignment size by the vertical identification data to obtain the vertical component.

18. The method according to claim 17, wherein the method further comprises:

if the value of the vertical flag bit is a second value, determining the vertical identification data as the vertical component.

19. The method according to claim 14, wherein the target alignment size comprises a horizontal alignment size and a vertical alignment size, the position vector difference comprises a horizontal component and a vertical component, and the position identification data comprises horizontal identification data and vertical identification data; and

determining the position vector difference based on the target alignment size, the position identification data, and the first flag bit comprises:

if a value of the first flag bit is a first value, multiplying the horizontal alignment size by the horizontal identification data to obtain the horizontal component, and multiplying the vertical alignment size by the vertical identification data to obtain the vertical component.

20. The method according to claim 19, wherein the method further comprises:

if the value of the first flag bit is a second value, determining the horizontal identification data as the horizontal component, and determining the vertical identification data as the vertical component.

21. The method according to claim 14, wherein the target alignment size comprises a horizontal alignment size, the position vector difference comprises a horizontal component, the position identification data comprises horizontal identification data, the first flag bit comprises a horizontal flag bit, and the horizontal flag bit is further used in combination with the horizontal identification data to indicate the horizontal component; and

determining the position vector difference based on the target alignment size, the position identification data, and the first flag bit comprises:

multiplying the horizontal identification data by the horizontal alignment size and then adding a value of the horizontal flag bit to obtain the horizontal component.

22. The method according to claim 14 or 21, wherein the target alignment size comprises a vertical alignment size, the position vector difference comprises a vertical component, the position identification data comprises vertical identification data, the first flag bit comprises a vertical flag bit, and the vertical flag bit is further used in combination with the vertical identification data to indicate the vertical component; and

determining the position vector difference based on the target alignment size, the position identification data, and the first flag bit comprises:

multiplying the vertical identification data by the vertical alignment size and then adding a value of the vertical flag bit to obtain the vertical component.

23. The method according to any one of claims 14 to 22, wherein the method further comprises:

parsing the bitstream to obtain residual information of the current block, wherein the residual information indicates a prediction residual between the current block and the reference block; and

reconstructing the current block based on the position vector difference comprises:

reconstructing the current block based on the position vector difference and the residual information.

24. An encoding apparatus, wherein the apparatus comprises:

an obtaining module, configured to obtain a target region, wherein the target region is obtained by performing alignment processing on a target image based on a target alignment size;

a first determining module, configured to determine a position vector difference of a current block to be encoded in the target region, wherein the position vector difference indicates a difference between a position vector of the current block and a reference position vector, and the position vector of the current block indicates a position relationship between the current block and a reference block corresponding to the current block;

a second determining module, configured to determine, based on the target alignment size and the position vector difference, position identification data corresponding to the position vector difference and a first flag bit, wherein the position identification data is a multiple of the position vector difference relative to the target alignment size or is the position vector difference, and the first flag bit indicates a category of the position identification data; and

a first encoding module, configured to encode the position identification data and the first flag bit into a bitstream.

25. The apparatus according to claim 24, wherein the target alignment size comprises a horizontal alignment size, the position vector difference comprises a horizontal component, the position identification data comprises horizontal identification data, the first flag bit comprises a horizontal flag bit, and the horizontal flag bit indicates a category of the horizontal identification data; and

the second determining module is specifically configured to:

if the horizontal component is an integer multiple of the horizontal alignment size, determine a multiple of the horizontal component relative to the horizontal alignment size as the horizontal identification data, and determine a first value as a value of the horizontal flag bit.

26. The apparatus according to claim 25, wherein the second determining module is specifically configured to:

if the horizontal component is not an integer multiple of the horizontal alignment size, determine the horizontal component as the horizontal identification data, and determine a second value as the value of the horizontal flag bit.

27. The apparatus according to any one of claims 24 to 26, wherein the target alignment size comprises a vertical alignment size, the position vector difference comprises a vertical component, the position identification data comprises vertical identification data, the first flag bit comprises a vertical flag bit, and the vertical flag bit indicates a category of the vertical identification data; and

the second determining module is specifically configured to:

if the vertical component is an integer multiple of the vertical alignment size, determine a multiple of the vertical component relative to the vertical alignment size as the vertical identification data, and determine a first value as a value of the vertical flag bit.

28. The apparatus according to claim 27, wherein the second determining module is specifically configured to:

if the vertical component is not an integer multiple of the vertical alignment size, determine the vertical component as the vertical identification data, and determine a second value as the value of the vertical flag bit.

29. The apparatus according to claim 24, wherein the target alignment size comprises a horizontal alignment size and a vertical alignment size, the position vector difference comprises a horizontal component and a vertical component, and the position identification data comprises horizontal identification data and vertical identification data; and

the second determining module is specifically configured to:

determine a multiple of the horizontal component relative to the horizontal alignment size as the horizontal identification data, determine a multiple of the vertical component relative to the vertical alignment size as the vertical identification data, and determine a first value as a value of the first flag bit.

30. The apparatus according to claim 29, wherein the first determining module is specifically configured to:

determine a first candidate position vector difference and a second candidate position vector difference of the current block, wherein the first candidate position vector difference is determined based on first pixel precision, the second candidate position vector difference is determined based on second pixel precision, the first pixel precision is an integer, and the second pixel precision is a multiple of the target alignment size;

determine a rate-distortion cost of the first candidate position vector difference and a rate-distortion cost of the second candidate position vector difference; and

determine a candidate position vector difference with a smaller rate-distortion cost in the first candidate position vector difference and the second candidate position vector difference as the position vector difference of the current block.

31. The apparatus according to claim 29, wherein the second determining module is specifically configured to:
if the horizontal component is an integer multiple of the horizontal alignment size, and the vertical component is an integer multiple of the vertical alignment size, determine a multiple of the horizontal component relative to the horizontal alignment size as the horizontal identification data, determine a multiple of the vertical component relative to the vertical alignment size as the vertical identification data, and determine the first value as the value of the first flag bit.

32. The apparatus according to claim 31, wherein the second determining module is specifically configured to:
if the horizontal component is not an integer multiple of the horizontal alignment size, and/or the vertical component is not an integer multiple of the vertical alignment size, determine the horizontal component as the horizontal identification data, determine the vertical component as the vertical identification data, and determine a second value as the value of the first flag bit.

33. The apparatus according to claim 24, wherein the target alignment size comprises a horizontal alignment size, the position vector difference comprises a horizontal component, the position identification data comprises horizontal identification data, the first flag bit comprises a horizontal flag bit, and the horizontal flag bit is further used in combination with the horizontal identification data to indicate the horizontal component; and
the second determining module is specifically configured to:
determine a quotient obtained by dividing the horizontal component by the horizontal alignment size as the horizontal identification data, and determine a remainder obtained by dividing the horizontal component by the horizontal alignment size as a value of the horizontal flag bit.

34. The apparatus according to claim 24 or 33, wherein the target alignment size comprises a vertical alignment size, the position vector difference comprises a vertical component, the position identification data comprises vertical identification data, the first flag bit comprises a vertical flag bit, and the vertical flag bit is further used in combination with the vertical identification data to indicate the vertical component; and
the second determining module is specifically configured to:
determine a quotient obtained by dividing the vertical component by the vertical alignment size as the vertical identification data, and determine a remainder obtained by dividing the vertical component by the vertical alignment size as a value of the vertical flag bit.

35. The apparatus according to any one of claims 24 to 34, wherein the target region is obtained by performing alignment processing on a text region in the target image based on the target alignment size, and the text region comprises at least one character.

36. The apparatus according to any one of claims 24 to 35, wherein the apparatus further comprises:
a second encoding module, configured to encode residual information of the current block into the bitstream, wherein the residual information indicates a prediction residual between the current block and the reference block.

37. A decoding apparatus, wherein the apparatus comprises:

a first parsing module, configured to parse a bitstream to obtain position identification data corresponding to a position vector difference of a current block to be decoded in a target region and a first flag bit, wherein

the position vector difference indicates a difference between a position vector of the current block and a reference position vector, the position vector of the current block indicates a position relationship between the current block and a reference block corresponding to the current block, the position identification data is a multiple of the position vector difference relative to the target alignment size or is the position vector difference, and the first flag bit indicates a category of the position identification data;

a determining module, configured to determine the position vector difference based on the target alignment size, the position identification data, and the first flag bit; and

a reconstruction module, configured to reconstruct the current block based on the position vector difference.

38. The apparatus according to claim 37, wherein the target alignment size comprises a horizontal alignment size, the position vector difference comprises a horizontal component, the position identification data comprises horizontal identification data, the first flag bit comprises a horizontal flag bit, and the horizontal flag bit indicates a category of the horizontal identification data; and

the determining module is specifically configured to:

if a value of the horizontal flag bit is a first value, multiply the horizontal alignment size by the horizontal identification data to obtain the horizontal component.

39. The apparatus according to claim 38, wherein the determining module is specifically configured to:

if the value of the horizontal flag bit is a second value, determine the horizontal identification data as the horizontal component.

40. The apparatus according to any one of claims 37 to 39, wherein the target alignment size comprises a vertical alignment size, the position vector difference comprises a vertical component, the position identification data comprises vertical identification data, the first flag bit comprises a vertical flag bit, and the vertical flag bit indicates a category of the vertical identification data; and

the determining module is specifically configured to:

if a value of the vertical flag bit is a first value, multiply the vertical alignment size by the vertical identification data to obtain the vertical component.

41. The apparatus according to claim 40, wherein the determining module is specifically configured to:

if the value of the vertical flag bit is a second value, determine the vertical identification data as the vertical component.

42. The apparatus according to claim 37, wherein the target alignment size comprises a horizontal alignment size and a vertical alignment size, the position vector difference comprises a horizontal component and a vertical component, and the position identification data comprises horizontal identification data and vertical identification data; and

the determining module is specifically configured to:

if a value of the first flag bit is a first value, multiply the horizontal alignment size by the horizontal identification data to obtain the horizontal component, and multiply the vertical alignment size by the vertical identification data to obtain the vertical component.

43. The apparatus according to claim 42, wherein the determining module is specifically configured to:

if the value of the first flag bit is a second value, determine the horizontal identification data as the horizontal component, and determine the vertical identification data as the vertical component.

44. The apparatus according to claim 37, wherein the target alignment size comprises a horizontal alignment size, the position vector difference comprises a horizontal component, the position identification data comprises horizontal identification data, the first flag bit comprises a horizontal flag bit, and the horizontal flag bit is further used in combination with the horizontal identification data to indicate the horizontal component; and

the determining module is specifically configured to:

multiply the horizontal identification data by the horizontal alignment size and then add a value of the horizontal flag bit to obtain the horizontal component.

45. The apparatus according to claim 37 or 44, wherein the target alignment size comprises a vertical alignment size, the position vector difference comprises a vertical component, the position identification data comprises vertical identification data, the first flag bit comprises a vertical flag bit, and the vertical flag bit is further used in combination with the vertical identification data to indicate the vertical component; and

the determining module is specifically configured to:

multiply the vertical identification data by the vertical alignment size and then add a value of the vertical flag bit to obtain the vertical component.

46. The apparatus according to any one of claims 37 to 45, wherein the apparatus further comprises:

a second parsing module, configured to parse the bitstream to obtain residual information of the current block, wherein the residual information indicates a prediction residual between the current block and the reference block; and
the reconstruction module is specifically configured to:
reconstruct the current block based on the position vector difference and the residual information.

47. An encoding device, wherein the encoding device comprises a memory and a processor, wherein

the memory is configured to store a computer program; and
the processor is configured to execute the computer program to implement the steps of the method according to any one of claims 1 to 13.

48. A decoding device, wherein the decoding device comprises a memory and a processor, wherein

the memory is configured to store a computer program; and
the processor is configured to execute the computer program to implement the steps of the method according to any one of claims 14 to 23.

49. A computer-readable storage medium, wherein the storage medium stores instructions, and when the instructions are run on a computer, the computer is enabled to perform the steps of the method according to any one of claims 1 to 23.

50. A computer program product, wherein the computer program product stores computer instructions, and when the computer instructions are executed by a processor, the steps of the method according to any one of claims 1 to 23 are implemented.

51. A computer-readable storage medium, wherein the computer-readable storage medium stores a video bitstream obtained by performing the method according to any one of claims 1 to 23 by one or more processors.

FIG. 1

Video frame image → Video encoding → Video encapsulation → Channel transmission → Video decapsulation → Video decoding → Reconstructed video frame

Encoder side

Decoder side

FIG. 2

Video encoding

Video frame → Text processing → Position vector difference encoding → Bitstream → Video encapsulation

Text processing → Standard video encoding → Bitstream

## FIG. 3

Video decoding

Video decapsulation → Bitstream → Position vector difference decoding → Text reconstruction → Reconstructed video frame

Bitstream → Standard video decoding → Text reconstruction

## FIG. 4

| Obtain a target region | 501 |

| Determine a position vector difference of a current block to be encoded in the target region | 502 |

| Determine, based on a target alignment size and the position vector difference of the current block, position identification data corresponding to the position vector difference and a first flag bit | 503 |

| Encode the position identification data and the first flag bit into a bitstream | 504 |

## FIG. 5

Target image

tian　bao　shuo　ming

Text region in
the target
image

tian　　bao　　shuo　　ming

Filled text
region

tian　　bao　　shuo　　ming

Target region

tian | bao | shuo | ming

FIG. 6

Horizontal
filling size

Width

Height　　tian

Vertical
filling size

Vertical
alignment
size

Horizontal
alignment size

Left ◄─────► Right

FIG. 7

Parse a bitstream to obtain position identification data corresponding to a position vector difference of a current block to be decoded in a target region and a first flag bit — 801

Determine the position vector difference based on a target alignment size, the position identification data, and the first flag bit — 802

Reconstruct the current block based on the position vector difference — 803

FIG. 8

Encoding apparatus

Obtaining module — 901

First determining module — 902

Second determining module — 903

First encoding module — 904

FIG. 9

FIG. 10

**INTERNATIONAL SEARCH REPORT**

| International application No. |
|---|
| **PCT/CN2024/078771** |

| A. | CLASSIFICATION OF SUBJECT MATTER |
|---|---|

H04N19/513(2014.01)i

According to International Patent Classification (IPC) or to both national classification and IPC

| B. | FIELDS SEARCHED |
|---|---|

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, ENTXT, ENTXTC, VEN, CJFD: 位置, 位移, 运动, 向量, 矢量, 差, 倍数, 商, 除以, 块, 区域, 单元, 尺寸, 大小, 长, 宽, 高, 对齐, 减小, 降低, 节省, 比特, 数据量, position, location, motion, vector, MV, MVD, difference, multiple, product, divide, division, block, area, CU, size, width, length, height, align, save, decrease, reduce, bit, data

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP H03129986 A (SONY CORP.) 03 June 1991 (1991-06-03)<br>entire document | 1-51 |
| A | US 5428396 A (SONY CORP.) 27 June 1995 (1995-06-27)<br>entire document | 1-51 |
| A | KR 970009402 A (SAMSUNG ELECTRONICS CO., LTD.) 24 February 1997 (1997-02-24)<br>entire document | 1-51 |
| A | WO 2019013434 A1 (SK TELECOM CO., LTD.) 17 January 2019 (2019-01-17)<br>entire document | 1-51 |
| A | CN 111918065 A (ZTE CORP.) 10 November 2020 (2020-11-10)<br>entire document | 1-51 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 May 2024** | **23 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/078771** |

| Patent document cited in search report | | | Publication date (day/month/year) | Patent family member(s) | | | Publication date (day/month/year) |
| --- | --- | --- | --- | --- | --- | --- | --- |
| JP | H03129986 | A | 03 June 1991 | JP | 2712645 | B2 | 16 February 1998 |
| US | 5428396 | A | 27 June 1995 | None | | | |
| KR | 970009402 | A | 24 February 1997 | KR | 0183165 | B1 | 01 May 1999 |
| WO | 2019013434 | A1 | 17 January 2019 | KR | 20220136330 | A | 07 October 2022 |
| | | | | KR | 102618414 | B1 | 27 December 2023 |
| | | | | KR | 20240013890 | A | 30 January 2024 |
| | | | | KR | 20180107687 | A | 02 October 2018 |
| | | | | KR | 102450863 | B1 | 05 October 2022 |
| | | | | KR | 20240013891 | A | 30 January 2024 |
| | | | | KR | 20240001100 | A | 03 January 2024 |
| CN | 111918065 | A | 10 November 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310254388